# FASCICULE DE BREVET EUROPEEN

(11) **EP 2 050 081 B1**
(45) Date de publication et mention de la délivrance du brevet: **11.11.2015**
(21) Numéro de dépôt: 07823276.6
(22) Date de dépôt: 11.07.2007
(51) Int. Cl.: G06Q 20/34, G07F 7/08, G07F 7/10, H04W 12/08, H04M 1/725, H04W 4/00, H04L 12/725, H04L 29/08, H04L 29/06

(54) **PROCEDE DE ROUTAGE DE DONNEES D'APPLICATION ENTRANTES DANS UN CHIPSET NFC, PAR IDENTIFICATION DE L'APPLICATION**
VERFAHREN ZUR WEITERLEITUNG EMPFANGENER ANWENDUNGSDATEN IN EINEM NFC-CHIPSATZ DURCH IDENTIFIKATION DER ANWENDUNG
METHOD OF ROUTING INCOMING APPLICATION DATA IN AN NFC CHIPSET, THROUGH IDENTIFICATION OF THE APPLICATION

(30) Priorité: 04.08.2006 FR 0607179
(43) Date de publication de la demande: 22.04.2009
(73) Titulaire: Inside Secure, 13590 Meyreuil (FR)
(72) Inventeur: CHARRAT, Bruno, F-13090 Aix en Provence (FR); MARTINEAU, Philippe, F-13710 Fuveau (FR)
(74) Mandataire: Marchand, André
(86) Numéro de dépôt international: PCT/FR2007/001185
(87) Numéro de publication internationale: WO 2008/017745

(56) Documents cités:
- WO-A-2004/029860
- WO-A-2005/076857
- US-A1- 2004 087 273

## Description

La présente invention concerne un procédé de routage de données d'application dans un système NFC (Near Field Communication) comprenant un circuit d'interface NFC assurant l'émission et la réception de données sans contact.

La présente invention concerne notamment le routage de données d'application entrantes reçues par le circuit d'interface.

La présente invention concerne également, de façon générale, la réalisation d'un chipset NFC.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants NFC présentant plusieurs modes de fonctionnement, à savoir un mode "lecteur" (Reader Mode), un mode "émulation de carte", et un mode "device " (appelé également mode "device-to-device" soit "dispositif à dispositif"). Dans le mode "lecteur", le composant NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le composant NFC fonctionne de façon passive à la manière d'un transpondeur pour dialoguer avec un lecteur et être vu par l'autre lecteur comme une puce RFID. Le composant n'émet pas de champ magnétique, reçoit des données en démodulant un champ magnétique émis par l'autre lecteur et émet des données par modulation de l'impédance de son circuit d'antenne (modulation de charge). Dans le mode "device", le composant doit s'apparier avec un autre composant NFC se trouvant dans le même mode de fonctionnement, et chaque composant NFC se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un composant NFC peut mettre en oeuvre plusieurs protocoles de communication sans contact et est par exemple capable d'échanger des données suivant le protocole ISO 14443-A, le protocole ISO 14443-B, le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC est donc un dispositif multimode et multiprotocole. La demanderesse commercialise par exemple un composant NFC sous la désignation "MicroRead".

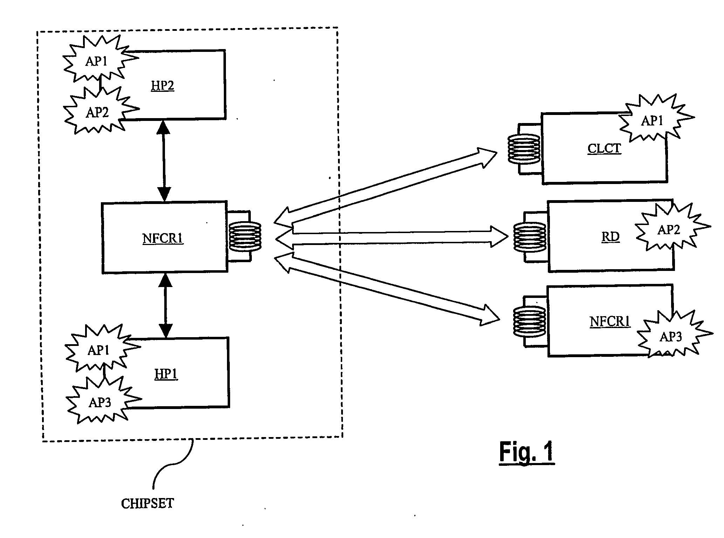

En raison de ses capacités de communication étendues, un composant NFC est destiné à être intégré dans des dispositifs portatifs tels des téléphones portables ou des PDA (Assistant Numérique Personnel). On est donc amené à réaliser un chipset NFC du type représenté en figure 1, c'est à dire un ensemble de puces comprenant un composant NFC (référencé "NFCR1") et au moins un premier processeur hôte HP1. On entend par "processeur hôte" tout circuit intégré comprenant un microprocesseur ou un microcontrôleur et qui est connecté à un port du composant NFC. Dans de nombreuses applications, le chipset NFC comprend également un second processeur hôte HP2 et parfois in troisième.

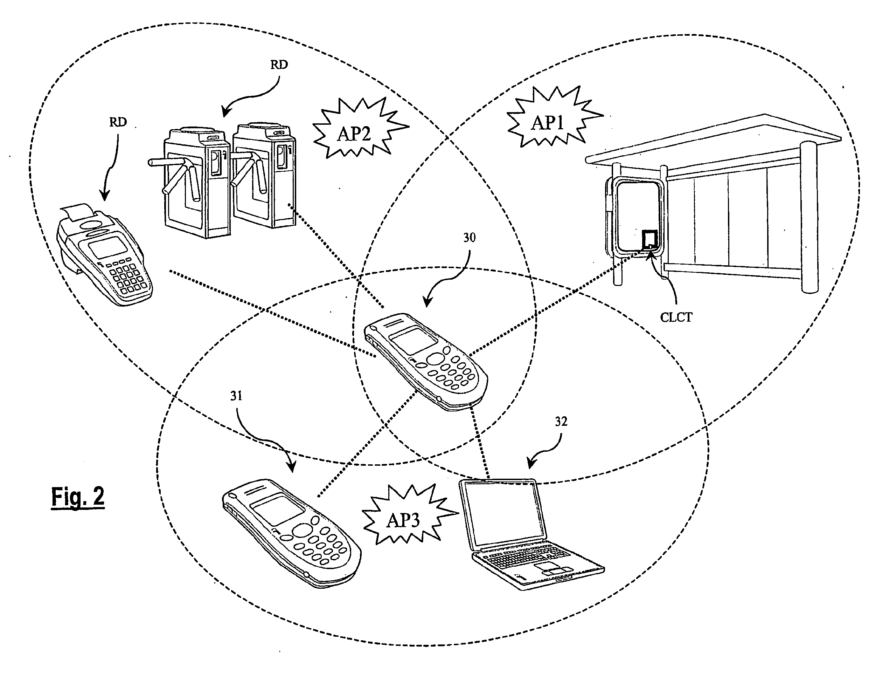

Le premier processeur hôte HP1 est le processeur principal du dispositif dans lequel le composant NFC est embarqué, tandis que le second processeur hôte HP2 est un circuit sécurisé. Le processeur hôte HP1 est généralement un processeur non sécurisé, par exemple le circuit de bande de base d'un téléphone mobile ("baseband" ou circuit de radiotéléphanie). Le processeur hôte HP2 est par exemple une carte SIM (c'est-à-dire le microcontrôleur présent dans une carte SIM). Les ressources du composant NFC sont donc mises à la disposition des processeurs HP1, HP2 pour leur permettre de gérer des applications sans contact. De telles applications sont illustrées sur la figure 2 qui représente un téléphone mobile 30 équipé du système (chipset) NFC de la figure 1. On distingue :
1) des applications de type AP1 : le composant NFC du téléphone mobile 30 est en mode lecteur pour lire ou écrire un circuit intégré sans contact CLCT. Le téléphone mobile est dans ce cas utilisé comme un lecteur RFID. Ce type d'application peut être gratuit et consister par exemple dans la lecture de données publicitaires insérées dans un affichage publicitaire d'une aubette. L'application peut aussi être payante et consister par exemple dans la lecture d'informations réservées à des abonnés. Le programme de l'application AP1 est de préférence détenu et exécuté par le processeur HP1 si le service est gratuit ou est de préférence détenu et exécuté par le processeur HP2 s'il est payant car il nécessite une identification de l'abonné. Ainsi, comme illustré en figure 1, une application AP1 peut être prise en charge par le processeur HP1 ou le processeur HP2.
2) des applications de type AP2 : le composant NFC du téléphone 30 est en mode émulation de carte pour être lu par des lecteurs RD conventionnels dans des applications de paiement ou de contrôle d'accès payant (machine de paiement, entrée de métro, etc.). Le téléphone mobile 30 est alors utilisé comme une carte à puce. Le programme de l'application AP2 est de préférence détenu et exécuté par le processeur sécurisé HP2, comme représenté en figure 1, car l'accès au service nécessite une identification de l'abonné.
3) des applications de type AP3 : le composant NFC du téléphone 30 est en mode "device" et dialogue avec un autre dispositif, par exemple un lecteur embarqué dans un autre téléphone mobile 31 ou dans un ordinateur 32. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

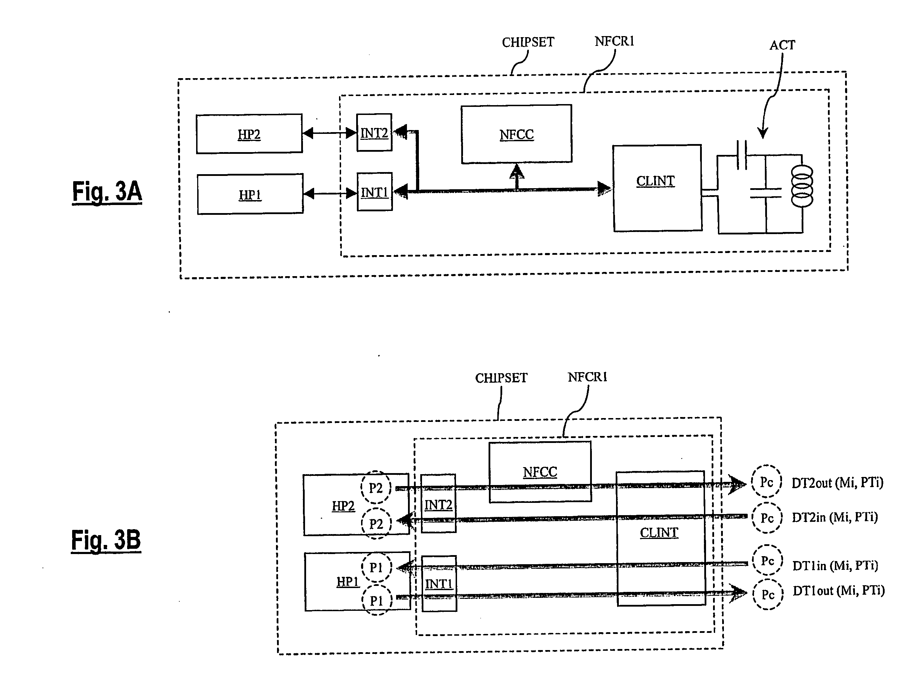

Ainsi, la réalisation d'un chipset NFC nécessite de prévoir un routage (acheminement) des flux de données entre chacun des processeurs HP1, HP2 et le composant NFC (données émises via le canal de transmission de données sans contact) et des flux de données entrantes (données reçues via le canal de transmission de données sans contact) entre le composant NFC et chacun des processeurs HP1, HP2. Cela pose un certain nombre de problèmes pratiques qui seront compris en se référant aux figures 3A, 3B.

La figure 3A représente schématiquement l'architecture du composant NFC. Le composant comprend un circuit d'interface CLINT pour l'émission/réception de données sans contact, équipé d'un circuit d'antenne ACT, des interfaces de communication filaires INT1, INT2 reliées au circuit d'interface CLINT, et un contrôleur NFCC. L'interface INT1 est connectée au processeur hôte HP1, et l'interface INT2 connectée au processeur hôte HP2. L'ensemble de ces éléments forme un chipset NFC.

La figure 3B représente les flux de données devant être aiguillés pour que les ressources du circuit d'interface CLINT puissent être utilisées par chacun des processeurs HP1, HP2. On suppose dans un souci de simplicité que le circuit d'interface CLINT peut émettre ou recevoir des données selon trois protocoles PT1, PT2, PT3 seulement, par exemple ISO 14443-A, ISO 14443-B et ISO 15693, et présente les trois modes de fonctionnement M1, M2, M3 susmentionnés (mode lecteur, mode émulation et mode "device"). On distingue ainsi quatre types différents de flux de données :
1) un flux de données sortant DT1out(Mi, PTi) issu d'un point source P1 localisé dans le processeur HP1, transmis à un point de destination Pc localisé dans le circuit d'interface CLINT puis transmis par celui-ci dans un canal de transmission de données sans contact créé suivant un protocole PTi (PT1, PT2 ou PT3) et un mode de fonctionnement Mi (M1, M2 ou M3),
2) un flux de données sortant DT2out (Mi, PTi) issu d'un point source P2 localisé dans le processeur HP2, transmis à un point de destination Pc localisé dans le circuit d'interface CLINT puis transmis par celui-ci via un canal de transmission de données sans contact créé suivant un protocole PTi et un mode de fonctionnement Mi,
3) un flux de données entrant DT1in(Mi, PTi) reçu par le circuit d'interface CLINT via un canal de transmission de données sans contact créé suivant un protocole PTi et un mode de fonctionnement Mi, puis transmis par le circuit d'interface CLINT à partir d'un point source Pc jusqu'à un point de destination P1 se trouvant dans le processeur HP1,
4) un flux de données entrant DT2in(Mi, PTi) reçu par le circuit d'interface CLINT via un canal de transmission de données sans contact créé suivant un protocole PTi et un mode de fonctionnement Mi, puis transmis par le circuit d'interface CLINT à partir d'un point source Pc jusqu'à un point de destination P2 se trouvant dans le processeur HP2.

Chaque flux de données sortant pouvant être émis dans trois modes de fonctionnement M1, M2, M3 et selon trois protocoles PT1, PT2, PT3, il vient que 9 configurations différentes sont possibles pour chaque flux de données sortant (en supposant que chaque combinaison mode Mi et protocole PTi soit autorisée). Cela signifie qu'il ne suffit pas que l'un des processeurs HP1 ou HP2 envoie au circuit d'interface CLINT les données à émettre. Le processeur doit également préciser, pour chaque chaîne de données émise, la configuration mode/protocole Mi/PTi à utiliser par le circuit d'interface CLINT pour transmettre ces données dans un canal de transmission de données sans contact.

Lorsque des données entrantes sont reçues, via un canal de transmission de données sans contact, par le circuit d'interface CLINT, le circuit d'interface ainsi que le contrôleur NFCC ne savent pas nécessairement quel est le processeur hôte destinataire de ces données. En conséquence, dans l'art antérieur, les données sont envoyées aux deux processeurs, à charge au processeur qui n'est pas concerné par les données de ne pas y répondre.

Un procédé de routage des données entrantes plus élaboré est décrit par la demande WO 2004/029860. Ce procédé consiste à utiliser, comme moyen de routage des données entrantes, des commandes APDU (Application Protocol Data Unit) reçues via le canal de transmission de données sans contact. Toutefois, comme indiqué dans cette demande, ce procédé nécessite que de nouveaux protocoles soient développés pour mettre en oeuvre le routage, ce qui signifie que l'organe externe émettant les données dans le canal de transmission de données sans contact doit spécifier, dans les commandes APDU, à quel organe interne (notamment quel processeur hôte) les données sont destinées.

Or, dans de nombreuses applications, l'organe externe émettant des données n'est pas conçu pour donner des indications de routage permettant de savoir quel est le processeur destinataire de ces données. Le routage est une caractéristique interne liée au fait que plusieurs processeurs d'un même chipset NFC partagent le même circuit d'interface pour l'émission/réception de données sans contact. Il est donc peu probable qu'un protocole de routage universel soit intégré dans un proche avenir dans des dispositifs ne répondant pas à une norme NFC. Par exemple, un lecteur conventionnel utilisé pour des applications de paiement ou de contrôle d'accès envoie des commandes d'authentification et/ou de vérification de code secret qui s'adressent à des cartes à puce sans contact. Au cours d'une authentification, un tel lecteur ne sait pas s'il s'adresse à une vraie carte sans contact ou à un composant NFC en mode émulation de carte. Par conséquent, un tel lecteur n'est pas conçu pour émettre des paramètres permettant le routage, à l'intérieur du chipset NFC, des données d'application qu'il envoie.

Ainsi, un premier objectif de l'invention est de prévoir un moyen permettant d'acheminer des données entrantes reçues par le circuit d'interface CLINT, de façon simple et efficace, sans nécessiter une gestion du routage par l'organe externe émettant les données.

Un autre objectif que vise l'invention est de pouvoir contrôler les flux de données entre le processeur non sécurisé HP1 du chipset NFC et le point source ou destination Pc (données sans contact émises ou reçues via le circuit d'interface CLINT). De tels flux de données correspondent en effet à des applications NFC que les fournisseurs de services ("providers") veulent pouvoir contrôler en vue d'une exploitation commerciale, malgré le fait que le processeur HP1 ne soit pas sécurisé. Préférentiellement, on souhaite également pouvoir contrôler des flux de données entre le processeur non sécurisé HP1, d'autres processeurs sécurisés pouvant faire partie du système, et le circuit d'interface CLINT.

Pour assurer le routage de données sortantes tout en permettant de configurer le circuit d'interface CLINT de façon appropriée, il a été proposé de prévoir un protocole de transfert de données HCI ("Host Controller Interface") de type "universel", permettant à tout type de processeur hôte de fournir au circuit d'interface CLINT des données à émettre, tout en spécifiant la configuration à utiliser (protocole PTi et mode de fonctionnement Mi) pour transmettre les données dans le canal de communication sans contact. Un tel protocole HCI prévoit des trames de données comprenant chacune des champs d'en-tête et des champs de données. Les champs d'en-tête comprennent les informations nécessaires au contrôle du circuit d'interface CLINT, notamment des champs spécifiant les points de départ et de destination des données, le mode de fonctionnement et le protocole à utiliser par le circuit d'interface CLINT.

Toutefois le protocole HCI classique prévoit des trames de données ayant des champs d'en-tête longs et complexes, nécessitant un temps de traitement non négligeable avant le traitement des données elles-mêmes. Ce problème est appelé "overheading", ce qui signifie que des en-têtes de trames trop longues surchargent les flux de données et grèvent le temps de transmission des données. Ces champs d'en-tête de grande taille nécessitent de plus des circuits tampon (buffers) de grande taille et une puissance de traitement élevée.

Ainsi, encore un autre objectif de la présente invention est de prévoir un procédé de routage de données dans un chipset NFC qui soit simple à mettre en oeuvre et ne nécessite pas des champs d'en-tête de grande longueur.

Au moins un objectif de l'invention est atteint par la prévision d'un procédé de routage de données d'application entrantes ou sortantes dans un système NFC comprenant un circuit d'interface NFC assurant l'émission et la réception de données sans contact, dans lequel le routage de données d'application entrantes reçues par le circuit d'interface comprend les étapes consistant à : acheminer au moins les premières données d'application entrantes à un point de destination situé dans le système NFC et désigné comme point d'arbitrage du routage des données d'application entrantes, faire analyser les premières données d'application entrantes par le point d'arbitrage afin que celui-ci identifie l'application au titre de laquelle les données sont envoyées au système NFC, et faire désigner par le point d'arbitrage un point de destination des données d'application et de traitement de l'application, et acheminer les données d'application entrantes suivantes au point de destination et de traitement, et acheminer au circuit d'interface NFC des données d'application sortantes émises par le point de destination et de traitement.

Selon un mode de réalisation, l'analyse des premières données d'application entrantes par le point d'arbitrage, afin d'identifier l'application, comprend l'extraction d'un identifiant d'application présent dans les données.

Selon un mode de réalisation, l'analyse des premières données d'application entrantes par le point d'arbitrage, afin d'identifier l'application, est complétée par l'analyse de paramètres de fonctionnement du circuit d'interface NFC, tels le mode de fonctionnement du circuit d'interface ou le protocole de transmission de données sans contact dans lequel les données entrantes sont reçues.

Selon un mode de réalisation, le routage des premières données d'application entrantes au point d'arbitrage, le routage des données d'application entrantes suivantes au point de destination et de traitement, et le routage au circuit d'interface NFC des données d'application sortantes émises par le point de destination et de traitement, sont assurés par un organe de routage distinct du point d'arbitrage.

Selon un mode de réalisation, le point d'arbitrage est localisé dans un processeur hôte du système NFC.

Selon un mode de réalisation, le point de destination et de traitement est localisé dans un processeur hôte du système NFC.

Selon un mode de réalisation, le point d'arbitrage est localisé dans un processeur hôte sécurisé du système NFC.

Selon un mode de réalisation, le processeur hôte dans lequel est localisé le point d'arbitrage est un circuit intégré de carte SIM.

Selon un mode de réalisation, le procédé comprend une étape d'authentification du processeur hôte dans lequel est localisé le point de destination et de traitement, et les données d'application entrantes suivantes ne sont pas acheminées au point de destination et de traitement si le processeur hôte n'a pas été valablement authentifié.

Selon un mode de réalisation, l'authentification du processeur hôte dans lequel est localisé le point de destination et de traitement comprend une étape de vérification d'un certificat présenté par le processeur hôte.

Selon un mode de réalisation, le point d'arbitrage désigne le point de destination et de traitement des données d'application en adressant à un organe de routage une commande de routage provoquant l'ouverture d'un canal de routage bidirectionnel entre le circuit d'interface NFC et le point de destination et de traitement.

Selon un mode de réalisation, les données d'application sont acheminées au sein du système NFC dans un canal de routage défini par un numéro de canal de routage et des paramètres de routage associés comprenant au moins un identifiant d'un point source et un identifiant d'un point de destination, et sont encapsulées dans une trame ayant un champ d'en-tête comprenant le numéro de canal de routage.

Selon un mode de réalisation, le circuit d'interface est configurable selon plusieurs modes de fonctionnement et selon plusieurs protocoles de communication sans contact, et les paramètres de routage associés au numéro de canal de routage comprennent un paramètre de mode de fonctionnement et un paramètre de protocole de communication du circuit d'interface.

Selon un mode de réalisation, un canal de routage est géré au moyen d'une table de routage associant les paramètres de routage au numéro de canal de routage.

L'invention concerne également un système NFC comprenant un circuit d'interface NFC assurant l'émission et la réception de données sans contact, et un organe de routage de données au sein du système NFC, dans lequel l'organe de routage est configuré pour traiter le routage de données d'application entrantes reçues via circuit d'interface NFC, en acheminant au moins les premières données d'application entrantes à un point de destination situé dans le système NFC et désigné comme point d'arbitrage du routage des données d'application entrantes, ledit point d'arbitrage est agencé pour analyser les premières données d'application entrantes afin d'identifier l'application au titre de laquelle les données sont envoyées au système NFC, et désigner à l'organe de routage un point de destination des données d'application et de traitement de l'application, et l'organe de routage est configuré pour acheminer les données d'application entrantes suivantes au point de destination et de traitement désigné par le point d'arbitrage, et acheminer au circuit d'interface NFC des données d'application sortantes émises par le point de destination et de traitement.

Selon un mode de réalisation, pour identifier l'application, le point d'arbitrage est agencé pour extraire un identifiant d'application présent dans les premières données d'application entrantes.

Selon un mode de réalisation, pour identifier l'application, le point d'arbitrage est agencé pour compléter l'analyse des premières données d'application entrantes par l'analyse de paramètres de fonctionnement du circuit d'interface NFC, tels le mode de fonctionnement du circuit d'interface ou le protocole de transmission de données sans contact dans lequel les données entrantes sont reçues.

Selon un mode de réalisation, l'organe de routage est distinct du point d'arbitrage et assure le routage des premières données d'application entrantes au point d'arbitrage, le routage des données d'application entrantes suivantes au point de destination et de traitement, et le routage au circuit d'interface NFC des données d'application sortantes émises par le point de destination et de traitement.

Selon un mode de réalisation, le point d'arbitrage est localisé dans un processeur hôte du système.

Selon un mode de réalisation, le point de destination et de traitement est localisé dans un processeur hôte du système.

Selon un mode de réalisation, le point d'arbitrage est localisé dans un processeur hôte sécurisé du système.

Selon un mode de réalisation, le processeur hôte dans lequel est localisé le point d'arbitrage est un circuit intégré de carte SIM.

Selon un mode de réalisation, le système est agencé pour conduire une étape d'authentification du processeur hôte dans lequel est localisé le point de destination et de traitement, et pour ne pas acheminer les données d'application entrantes suivantes au point de destination et de traitement si le processeur hôte n'a pas été valablement authentifié.

Selon un mode de réalisation, le système est agencé pour authentifier le processeur hôte en vérifiant un certificat présenté par le processeur hôte.

Selon un mode de réalisation, le point d'arbitrage est agencé pour désigner le point de destination et de traitement des données d'application en adressant à l'organe de routage une commande de routage provoquant l'ouverture d'un canal de routage bidirectionnel entre le circuit d'interface NFC et le point de destination et de traitement.

Selon un mode de réalisation, les données d'application sont acheminées dans un canal de routage défini par un numéro de canal de routage et des paramètres de routage associés comprenant au moins un identifiant d'un point source et un identifiant d'un point de destination, et sont encapsulées dans une trame ayant un champ d'en-tête comprenant le numéro de canal de routage.

Selon un mode de réalisation, le circuit d'interface est configurable selon plusieurs modes de fonctionnement et selon plusieurs protocoles de communication sans contact, et les paramètres de routage associés au numéro de canal de routage comprennent un paramètre de mode de fonctionnement et un paramètre de protocole de communication sans contact du circuit d'interface.

Selon un mode de réalisation, le système comprend une table de routage associant les paramètres de routage au numéro de canal de routage.

Ces objets, caractéristiques et avantages ainsi que d'autres de la présente invention seront exposés plus en détail dans la description suivante du procédé de l'invention, faite à titre non limitatif en relation avec les figures jointes parmi lesquelles :
- la figure 1 précédemment décrite représente sous forme de bloc une architecture classique de chipset NFC, et des circuits sans contact avec lesquels le chipset NFC peut dialoguer,
- la figure 2 précédemment décrite illustre diverses applications d'un chipset NFC intégré dans un téléphone mobile,
- la figure 3A précédemment décrite représente sous forme de bloc l'architecture classique d'un composant NFC présent dans le chipset NFC de la figure 1,
- la figure 3B précédemment décrite représente des flux de données traversant le chipset NFC et correspondant à différentes applications,
- la figure 4 illustre de façon schématique la mise en oeuvre du procédé de routage selon l'invention dans un chipset NFC,
- les figures 5 à 7 représentent des séquences d'échange de données entre des processeurs du chipset NFC,
- la figure 8 illustre un exemple de séquence de routage de données entrantes conduite conformément au procédé de l'invention,
- la figure 9 illustre un autre exemple de séquence de routage de données entrantes conduite conformément au procédé de l'invention,
- la figure 10 représente un exemple d'architecture matérielle d'un composant NFC présent dans le chipset NFC de la figure 4, et
- la figure 11 représente un exemple d'architecture logicielle du composant NFC de la figure 10.

Premier aspect de l'invention : contrôle des chemins de données au sein d'un chipset NFC

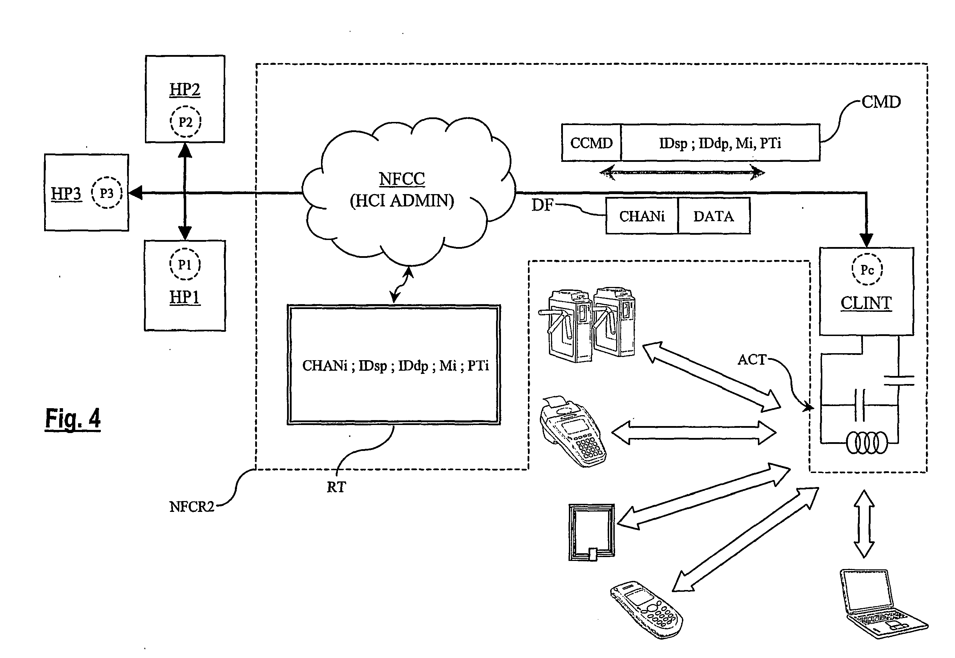

La figure 4 illustre de façon schématique la mise en oeuvre du procédé d'ouverture d'un chemin de données selon l'invention. Le procédé est mis en oeuvre dans un chipset NFC comprenant un composant NFC référencé "NFCR2" et des processeurs hôtes HP1, HP2, HP3. Le composant NFCR2 comprend les mêmes organes que le composant NFCR1 décrit plus haut, notamment un contrôleur NFCC et un circuit d'interface CLINT pour l'émission/réception de données sans contact, équipé d'un circuit d'antenne ACT. Dans un souci de simplicité, on suppose ici et dans ce qui suit que le circuit d'interface CLINT ne peut émettre ou recevoir des données que selon trois protocoles PTi, à savoir le protocole PT1 (ISO 14443-A ou "ISOA"), le protocole PT2 (ISO 14443-B ou "ISOB") et le protocole PT3 (ISO 15693 ou "ISO15"). Il présente par ailleurs les trois modes de fonctionnement Mi susmentionnés, à savoir M1 (Mode "lecteur"), M2 (mode "émulation de carte") et M3 (mode "devise").

Des points source ou destination d'un flux de données dans le chipset NFC sont désignés P1 (point localisé dans le processeur hôte HP1), P2 (point localisé dans le processeur hôte HP2), P3 (point localisé dans le processeur hôte HP3) et Pc (point localisé dans circuit d'interface CLINT).

Par exemple, le processeur hôte HP1 est le processeur principal du système dans lequel le composant NFC est embarqué. Il s'agit d'un processeur non sécurisé, c'est-à-dire ne comprenant pas les circuits classiques de cryptographie et d'authentification des processeurs sécurisés. Le processeur hôte HP2 et le processeur hôte HP3 sont ici des circuits sécurisés, tels qu'une carte SIM et une puce de carte bancaire.

L'un des processeurs hôte sécurisés du chipset NFC, par exemple le processeur HP2, est utilisé pour autoriser ou non l'ouverture du chemin de données en fonction de paramètres tels que le protocole PTi, le mode de fonctionnement Mi, et les identifiants des points source et destination du chemin de données. A cet effet, le processeur HP2 est préalablement authentifié par le contrôleur NFCC.

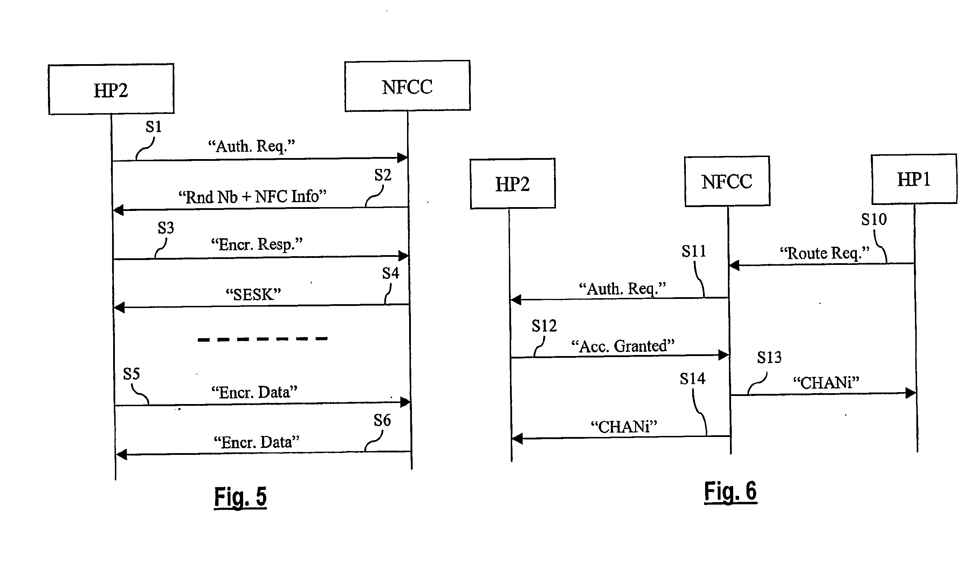

La figure 5 représente différentes étapes d'une séquence d'authentification du processeur hôte HP2 par le contrôleur NFCC, à l'initialisation du chipset NFC.

Au cours d'une première étape S1, le processeur HP2 émet une requête d'authentification à destination du contrôleur NFCC. A l'étape suivante S2, le contrôleur NFCC répond à la requête en fournissant un nombre aléatoire ("Rnd Nb") et des informations ("NFC Info") relatives au composant NFC (par exemple un numéro de série, une date de fabrication, ou encore un numéro de version de logiciel). A l'étape suivante S3, le processeur utilise une clé de chiffrement partagée avec le processeur hôte HP2 pour chiffrer le nombre aléatoire reçu, et éventuellement les autres informations reçues, et transmet une réponse chiffrée ("Encr. Resp") au contrôleur NFCC.

A l'étape S4 suivante, le contrôleur NFCC considère que le processeur HP2 est authentifié s'il a réussi à déchiffrer les informations reçues du processeur HP2 à l'aide de la clé de chiffrement qu'il partage avec les processeurs sécurisés autorisés. Si tel est le cas, le contrôleur NFCC transmet au processeur HP2 un message lui notifiant qu'il a été authentifié et contenant une clé de session ("SESK"). Si le processeur HP2 n'est pas authentifié, le contrôleur NFCC refuse toute autre communication avec ce dernier.

Si le processeur HP2 a été authentifié, le contrôleur NFCC et le processeur HP2 peuvent échanger des données ("Encr. Data"), notamment des informations de configuration ou de gestion sous une forme chiffrée à l'aide de la clé de session SESK (étapes S5 et S6). Par contre, si le processeur HP2 n'a pas été authentifié par le contrôleur NFCC, le contrôleur refuse systématiquement d'ouvrir des chemins de données.

La création proprement dite d'un chemin de données ou canal de routage est assurée par le contrôleur NFCC en tant qu'administrateur HCI ("HCI ADMIN"). Lorsqu'une commande de création d'un chemin de données est reçue (commande "Création d'une route") et est recevable, le contrôleur NFCC attribue au chemin de données un numéro de canal de routage CHANi, et envoie ensuite un message de confirmation à l'entité ayant émis la commande.

Plus particulièrement, le contrôleur NFCC est utilisé en tant qu'administrateur d'un protocole HCI (Host Computer Interface) selon l'invention qui présente les caractéristiques suivantes :
- l'utilisation de commandes CMD permettant la gestion d'un chemin de données (canal de routage), notamment des commandes d'ouverture et de fermeture de chemins de données, et
- l'utilisation de trames de données DF comprenant un champ d'en-tête de longueur réduite et un champ de normées (DATA), le champ d'en-tête comportant un numéro de canal de routage CHANi.

Des exemples de commandes de routage ainsi que des exemples de trames de données sont décrits en Annexe 1 qui fait partie intégrante de la description. Toutes les commandes pouvant être prévues ne seront pas décrites ici, dans un souci de simplicité. L'Annexe 1 décrit des commandes essentielles de création de route, de modification de route et de suppression de route, et les réponses à de telles commandes (messages de confirmation ou d'erreur). L'Annexe 1 décrit également le format des trames de données DF, qui présente avantageusement un champ d'en-tête de taille réduite ne comprenant que 8 bits.

Les commandes d'ouverture, de fermeture ou de modification d'un chemin de données sont émises par l'un des processeurs hôtes HP1, HP2 ou par le circuit d'interface CLINT et sont traitées par le contrôleur NFCC. Ces commandes spécifient le mode de fonctionnement Mi et le protocole PTi du circuit d'interface CLINT pour le chemin de données concerné. Si l'ouverture d'un chemin de données est demandée par l'un des processeurs hôtes HP1 ou HP2, le mode Mi et le protocole PTi figurant dans la commande sont utilisés par le contrôleur NFCC pour configurer le circuit d'interface CLINT en ce qui concerne le canal de communication sans contact que le circuit d'interface CLINT doit créer pour émettre les données qui seront reçues via le chemin de données. Si l'ouverture d'un chemin de données est demandée par le circuit d'interface CLINT, le mode de fonctionnement Mi et le protocole PTi spécifiés dans la commande émise par le circuit d'interface CLINT sont informatifs et précisent les conditions de mode de fonctionnement et de protocole dans lesquelles le circuit d'interface CLINT a reçu les données qu'il veut transmettre dans le chemin de données.

Il est à noter qu'une commande de transmission de données par un chemin de données non ouvert peut également déclencher une procédure d'ouverture du chemin de données avec demande d'autorisation préalable.

La figure 6 représente des étapes S10, S11, S12, S13, S14 d'une séquence générale d'ouverture d'un chemin de données. Cette séquence ne peut être exécutée que si le contrôleur NFCC a préalablement authentifié le processeur hôte HP2.

A l'étape S10, un processeur hôte, par exemple HP1, demande au contrôleur NFCC l'autorisation d'ouvrir un chemin de données ("Route Req."). A cet effet, le processeur HP1 fournit des informations relatives au chemin de données à ouvrir. Ces informations comprennent notamment le protocole et le mode de transmission du chemin de données à ouvrir, ainsi que des informations d'identification relatives aux points source et destination du chemin de données.

A l'étape S11, le contrôleur NFCC demande l'autorisation d'ouvrir le chemin de données au processeur HP2 ("Auth. Req.") . En fonction des informations reçues relatives au chemin à ouvrir, le processeur HP2 autorise ou non l'ouverture demandée du chemin. Par exemple, dans certains modes de fonctionnement, le processeur HP2 peut autoriser ou refuser systématiquement l'ouverture d'un chemin de données.

A l'étape S12, le processeur HP2 autorise l'ouverture du chemin de données en adressant au contrôleur NFCC une information déterminée ("Acc. Granted") contenant un identifiant de canal ("CHANi"). Aux étapes S13 et S14 suivantes, l'identifiant de canal attribué au chemin de données est fourni par le contrôleur NFCC aux processeurs HP1 et HP2. Si l'ouverture du chemin de données demandée est refusée, le processeur HP2 le notifie au contrôleur NFCC qui envoie alors un message de refus d'ouverture de canal au processeur HP1.

Ainsi, grâce à l'invention, l'exécution de toute application correspondant à un chemin de données déterminé est contrôlable au moyen du processeur sécurisé HP2 ou tout autre processeur sécurisé affecté à ce contrôle. Par exemple, des applications nécessitant l'utilisation du processeur hôte non sécurisé HP1 (par exemple des applications de lecture sans contact de fichier vidéo dans des lieux de vente publics, nécessitant la puissance de calcul du processeur HP1), peuvent être contrôlées par les fournisseurs d'accès. Il en est de même pour les applications gérées par un processeur comme le processeur HP3 qui, bien qu'étant sécurisé, n'est pas dévolu au contrôle de la sécurité au sein du chipset NFC et se voit donc soumis à l'arbitrage du processeur sécurisé HP2.

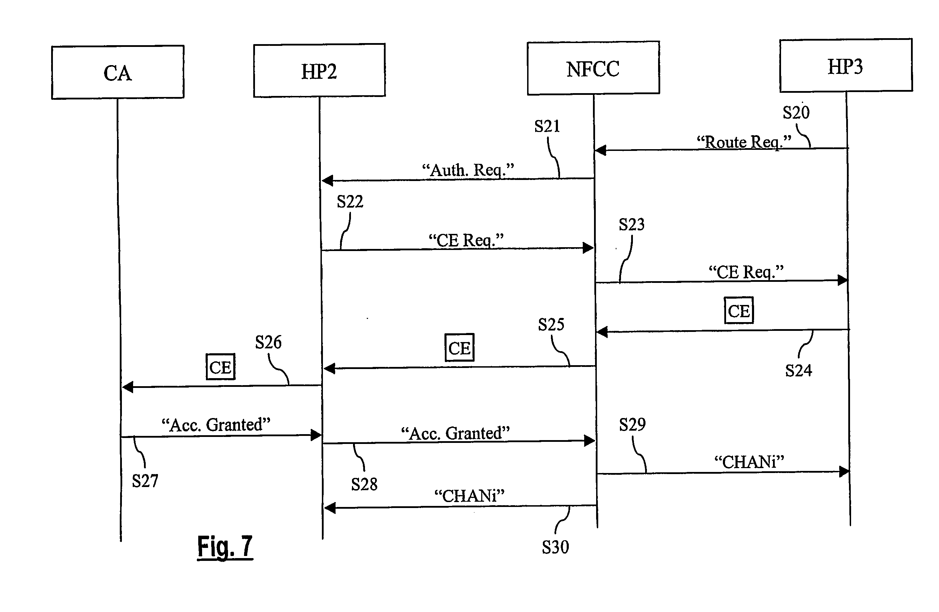

La figure 7 représente un autre exemple de séquence d'ouverture d'un chemin de données selon l'invention, comprenant des étapes S20 à S30. La séquence représentée sur la figure 7 fait intervenir un certificat CE fourni par une autorité de certification CA. Cette séquence est adaptée en particulier aux services dont l'accès est payant.

Ici, le processeur HP3 émet une requête d'ouverture d'un chemin de données (étape S20, "Route Req."). Cette requête est transmise par le contrôleur NFCC au processeur HP2 (étape S21) sous forme de demande d'autorisation ("Auth. Req."). Le processeur HP2 émet en réponse une demande de certificat (étape S22, "CE Req."), cette demande étant retransmise par le contrôleur NFCC au processeur émetteur de la requête d'ouverture de chemin de données, à savoir le processeur HP3, au cours d'une étape S23. A l'étape suivante S24, le processeur HP3 émet en réponse le certificat CE demandé qui est retransmis successivement par le contrôleur NFCC (étape S25), puis par le processeur HP2 à l'autorité de certification CA (étape S26). La liaison de communication entre l'autorité CA et le processeur HP2 dépend de la nature du chipset NFC ou du système auquel le chipset NFC est connecté. Si le système est un téléphone mobile, la liaison peut être établie dans un réseau mobile tel que GSM.

A l'étape S27 suivante, l'autorité de certification reconnaît ou non l'authenticité du certificat CE reçu. Si le certificat reçu est authentique, elle transmet au processeur HP2 un message ("Acc. Granted") indiquant que l'accès demandé est autorisé et indique le cas échéant un montant à payer pour l'accès demandé. A l'étape S28 suivante, le processeur HP2 informe le contrôleur NFCC que l'ouverture de chemin de données demandée est autorisée. Le contrôleur NFCC fournit alors un numéro de canal (CHANi) au processeur HP3 (étape S29) et au processeur HP2 (étape S30).

La séquence illustrée par la figure 7 est applicable par exemple, à l'achat par un utilisateur de l'accès à un service. Le processeur HP2 autorise la création d'un chemin de données entre le circuit d'interface CLINT et le processeur HP1 quand le circuit d'interface CLINT reçoit des données en mode "device" ISO B.

Il est à noter que toutes les informations échangées entre le contrôleur NFCC et le processeur HP3 peuvent être chiffrées à l'aide de la clé de session transmise à l'étape S4 (figure 5).

Il peut ne pas être nécessaire que le processeur HP2 s'adresse à une autorité de certification. Dans certaines applications, le processeur HP2 peut disposer de moyens propres pour vérifier un certificat. Avant d'autoriser l'ouverture d'un chemin, on peut également prévoir que le processeur HP2 authentifie le processeur HP3 en vérifiant que les processeurs HP2 et HP3 partagent une même clé secrète (étapes S2 à S4 de la figure 5).

Grâce à l'invention, un opérateur qui attribue des cartes SIM à des utilisateurs peut ainsi contrôler l'accès à des services à l'aide du système, et ce d'une manière indépendante des opérateurs qui fournissent les services.

Alternativement, l'authentification du processeur hôte HP3 par le processeur hôte HP2 peut être effectuée au préalable, par exemple lors de l'initialisation du système. Le processeur hôte HP2 n'autorise ensuite l'ouverture d'un chemin de données que si le processeur hôte émetteur de la requête d'ouverture a été préalablement authentifié.

Le contrôle de chemin de données pour mettre en oeuvre cet aspect de l'invention peut être fait par tout moyen classique, par exemple en utilisant des circuits de multiplexage et/ou des portes logiques contrôlés par des signaux fournis par le contrôleur NFCC sur autorisation du processeur sécurisé. On décrira toutefois dans ce qui suit un procédé de routage permettant un contrôle simple, rapide et efficace des chemins de données, formant un second aspect de l'invention indépendant du premier mais pouvant être avantageusement utilisé pour mettre en oeuvre le premier aspect.

Second aspect de l'invention : utilisation d'une table de routage pour le routage de données

Selon un aspect de l'invention, le contrôleur NFCC du composant NFC assure en outre la gestion d'une table de routage RT dans laquelle sont enregistrés des chemins de données, chaque chemin de données étant identifié par un numéro de canal de routage CHANi.

Les chemins de données enregistrés dans la table de routage sont différentiés les uns des autres au moins par les paramètres suivants :
CHANi; IDsp ; IDdp, Mi, PTi
CHANi étant le numéro de canal de routage attribué au chemin de données, IDsp un identifiant du point source du chemin de données, IDdp un identifiant du point de destination du chemin de données, Mi et PTi étant le mode de fonctionnement et le protocole de communication sans contact utilisé par le circuit d'interface CLINT pour émettre ou recevoir des données via un canal de transmission de données sans contact.

A chaque fois que le contrôleur NFCC attribue un numéro de canal de routage CHANi à un chemin de données, il inscrit dans la table de routage RT les paramètres IDsp, IDdp, Mi, PTi indiqués dans la commande.

Un exemple de table de routage créée par le contrôleur NFCC est décrit par le tableau 1 en Annexe 2, qui fait partie intégrante de la description. Cette table de routage est créée après réception d'une série de commandes d'ouverture de route ayant des points sources localisés dans l'un des processeurs HP1 ou HP2 (soit un point source P1 ou P2). Optionnellement, le contrôleur peut définir un point de destination secondaire destiné à recevoir copie des données circulant dans le chemin de données. Le point de destination secondaire ou point de notification est déterminé par le contrôleur à partir d'une table de notification (non représentée sur les figures) qui lui indique les chemins de données pour lesquels les données doivent être notifiées à l'autre processeur hôte. Bien que présentée de façon statique dans le tableau 1, la table de routage est dynamique et est mise à jour en temps réel en fonction des commandes de création, de modification ou de suppression reçues par le contrôleur NFCC.

Dans une variante de réalisation, la table de routage est statique et a été préenregistrée par le contrôleur NFCC, par exemple à la demande de l'un des processeurs hôtes et à la mise sous tension du système. Le tableau 2 en Annexe 2 décrit un exemple de table de routage préenregistrée ayant comme points sources les points P1, P2 ou P3 localisés dans les processeurs hôtes HP1, HP2, HP3. Le numéro de canal CHANi peut également être préenregistré dans la table pour chaque configuration de routage envisageable. Dans une telle table préenregistrée, un champ "occupé" et "autorisé" est prévu dans chaque ligne de la table (une ligne correspondant à un canal de routage). Le contrôleur NFCC inscrit la valeur "1" dans le champ "autorisé" d'un canal de routage dont la création a été autorisée par le processeur HP2, et inscrit 0 dans le cas contraire. Egalement, il inscrit la valeur "1" dans le champ "utilisé" lorsqu'il ouvre le chemin de données correspondant, et inscrit la valeur "0" en réponse à une commande de fermeture du chemin de données (les exemples décrits en Annexe étant arbitraires).

Le routage des données reçues dans les trames de données est également sous le contrôle du contrôleur NFCC, qui se réfère à la table de routage pour déterminer les points de destination de ces données. Avantageusement, comme cela apparaît dans le format des trames de données décrites en Annexe 1, il n'est pas nécessaire que le point source qui envoie les données au processeur spécifie tous les paramètres du canal de routage utilisé : le champ d'en-tête de la trame de données comprend simplement des bits de paramétrage T et L et 6 bits de numéro de canal (permettant de router simultanément 63 chemins de données, le canal "0" étant réservé à l'administration du protocole HCI).

Ainsi, sur réception d'une trame de données, le contrôleur NFCC renvoie les données au point de destination désigné dans la table de routage, en utilisant le numéro de canal en tant qu'index pour trouver ce point de destination dans la table de routage (ainsi qu'éventuellement le point de notification). Si le point de destination est le point Pc (interface CLINT), le contrôleur NFCC assure le paramétrage du circuit d'interface CLINT pour que celui-ci envoie les données dans un canal de transmission de données sans contact conforme aux informations de protocole sans contact PTi et de mode de fonctionnement Mi figurant dans la table de routage. Dans une variante de réalisation, le circuit d'interface CLINT assure lui-même son paramétrage en lisant la table de routage lorsque des données sont reçues dans une trame de données (ce qui nécessite qu'une partie des attributions du contrôleur NFCC soit transférée dans le circuit d'interface CLINT).

Ainsi, un autre avantage de la présente invention est que la table de routage permet le paramétrage du circuit d'interface CLINT sans qu'il soit nécessaire d'inclure les paramètres de mode de fonctionnement Mi et de protocole de communication sans contact PTi dans les en-têtes des trames de données. La table de routage selon l'invention n'est donc pas une simple table de routage, au sens conventionnel du terme, mais forme également une table de paramétrage.

Les chemins de données créés à la demande de l'un des processeurs hôtes HP1, HP2, HP3 ou à la demande du circuit d'interface CLINT sont de préférence bidirectionnels. Ainsi, par exemple, un fois qu'un chemin de données a été créé par un point P1 localisé dans le processeur HP1, pour émettre des données dans un canal de communication sans contact définit par le paramètre de mode M2 et le protocole PT2, toutes les données reçues par le circuit d'interface CLINT dans le mode M2 et suivant le protocole PT2 seront envoyées dans ce chemin de données et seront donc reçues par le point P1. L'homme de l'art notera également que la prévision de chemins de données bidirectionnels impose une gestion des conflits éventuels, en interdisant que deux chemins bidirectionnel ayant des points source et/ou destination différents utilisent les mêmes paramètres de mode Mi et de protocole PTi pour le circuit d'interface CLINT. Par exemple, la table de routage décrite par le tableau 1 représente des chemins de données qui ne peuvent coexister (par exemple canal 1 et canal 9, ces chemins de données n'étant décrits dans le même tableau qu'à titre illustratif).

Troisième aspect de l'invention : routage des données entrantes Comme indiqué au préambule, le routage de données entrantes selon la demande WO 2004/029860 se heurte au fait que de nouveaux protocoles doivent être développés pour mettre en oeuvre le routage au moyen des commandes APDU (Application Protocol Data Unit), car l'organe externe émettant les données dans le canal de transmission de données sans contact devrait spécifier à quel organe interne (quel processeur hôte) les données sont destinées.

La présente invention prévoit une solution de routage des données entrantes qui offre l'avantage d'être simple et de pouvoir être mise en oeuvre sans modification des commandes APDU couramment utilisées dans l'industrie.

Rappelons que les APDU sont des commandes spécifiques liées à une application, ou "commandes d'application". Ainsi, chaque type d'application peut comprendre un jeu de commandes APDU qui lui est propre. Ces commandes dont le format est prévu par la norme ISO 7816-4 sont utilisées par divers protocoles, notamment ISO 14443-A et ISO 14443-B, qui se réfèrent à la norme ISO 7816-4 en ce qui concerne les commandes d'application.

L'invention se base sur le fait qu'à l'ouverture d'une session d'application, le processeur externe gestionnaire de l'application, qui est l'émetteur des données d'application entrantes, envoie généralement une commande APDU particulière désignée SELECT-AID ou SELECT-FILE, ou encore une commande de type SELECT-CARD, qui comprend un champ AID (Application Identifier) désignant l'application visée par la commande (par exemple application "VISA", application "MASTERCARD" etc..). De façon générale, chaque fournisseur de service se voit attribuer des identificateurs d'application AID utilisés par la collectivité. En pratique le champ AID désigne généralement un répertoire (directory) du processeur destinataire qui pointe vers l'application concernée et active celle-ci sur réception de la commande. Le champ AID peut être simple (cas d'une commande APDU standard selon ISO 7816-4) ou complexe, être inséré dans des blocs de données formant l'en-tête de la commande (bloc de commande), notamment les champs appelés "P1" et "P2" des commandes APDU, ou être inséré dans un bloc de données rattaché au bloc de commande.

En général, le champ AID est envoyé une fois et une seule lors de l'ouverture de la session d'application, qui est généralement une session point à point, c'est-à-dire qui se déroule entre un point d'un processeur externe gestionnaire de l'application et un point de destination, ici un point P1, P2 ou P3 dans l'un des processeurs hôtes HP1, HP2, HP3.

Le procédé de routage selon l'invention repose sur une analyse des premières données entrantes comprenant tout d'abord la recherche et l'extraction de l'identificateur AID pour identifier l'application et déterminer ensuite quel est le processeur destinataire des données d'application entrantes. Selon l'invention, cette analyse des données entrantes est prioritairement confiée au processeur sécurisé du chipset NFC, si un tel processeur sécurisé existe. Dans l'exemple de chipset NFC décrit dans ce qui précède, ce processeur sécurisé est le processeur HP2, qui sera généralement en pratique un processeur de carte SIM.

Ainsi, selon l'invention, les premières données entrantes sont tout d'abord exclusivement envoyées à un point P2(AR) situé dans le processeur hôte sécurisé HP2, désigné en tant que point d'arbitrage du routage des données entrantes. Le point d'arbitrage P2(AR) traite ces données entrantes jusqu'à ce qu'il ait connaissance de l'identifiant d'application AID ou qu'il ait identifié l'application par une méthode dérivée décrite plus loin. Lorsque le point d'arbitrage P2(AR) a identifié l'application, le point d'arbitrage détermine un point de destination Pi devant traiter la session de l'application. Cette détermination est faite en fonction d'un paramétrage interne qui est sous le contrôle des opérateurs et peut se traduire sous la forme d'une table de correspondance mémorisée par le processeur HP2. Le point d'arbitrage P2(AR) adresse alors au contrôleur NFC une demande d'ouverture de canal de communication vers le point Pi et toutes les données entrantes suivantes sont envoyées au point Pi désigné.

Ainsi, ici également, l'invention permet à un opérateur qui attribue des cartes SIM à des utilisateurs, de contrôler l'accès à des services se présentant sous forme de données entrantes, et ce d'une manière indépendante des opérateurs qui fournissent les services, ou après avoir passé un accord avec ces derniers.

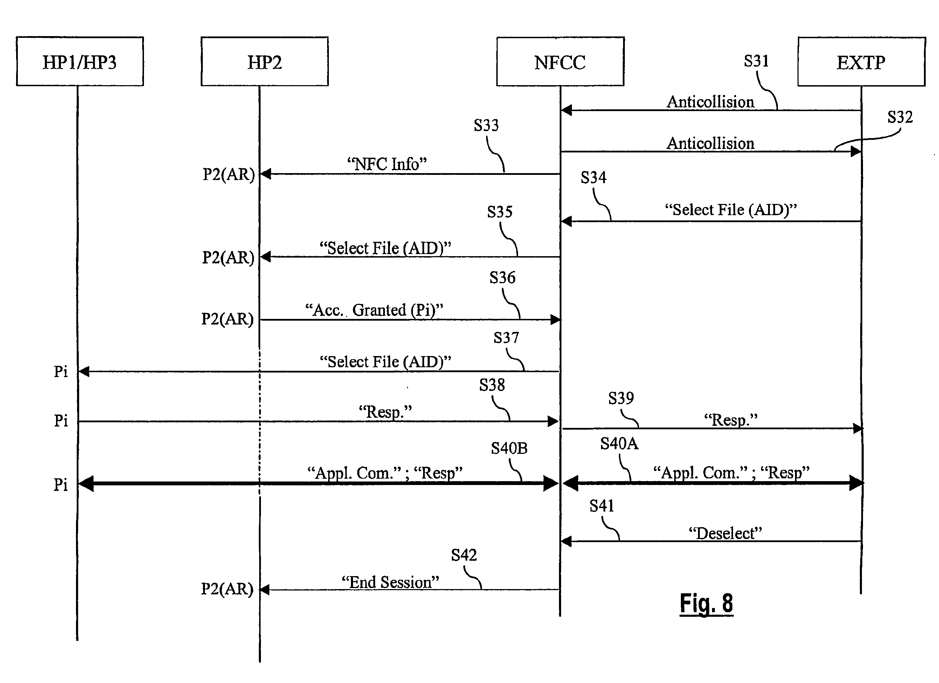

La figure 8 illustre un premier exemple de routage de données entrantes selon l'invention, en supposant ici que ces données contiennent un identificateur AID. La séquence de routage représentée fait intervenir :
- un processeur externe désigné "EXTP",
- le contrôleur NFCC,
- le processeur sécurisé HP2 en tant que processeur désigné comme arbitre du routage de données interne, et plus particulièrement le point d'arbitrage P2(AR) au sein du processeur HP2, qui peut correspondre à un programme particulier exécuté par le processeur HP2, et
- les processeurs hôtes HP1 et HP2 en tant que destinataires éventuels des données entrantes, et plus particulièrement un point Pi situé dans l'un de ces processeurs.

Au cours d'étapes S31 et S32 le contrôleur NFCC assure seul la gestion d'une séquence anticollision classique qui comprend la réception de commandes anticollision (S31) et le renvoi de réponses correspondantes (S32) et ce jusqu'à ce que la première commande d'application soit reçue. Pendant le traitement de la séquence anticollision, ou immédiatement après cette séquence, le contrôleur NFCC envoie au point d'arbitrage P2(AR) des informations sur le protocole de communication sans contact (ISOA, ISOB, etc.) mis en jeu (étape S33). Le point d'arbitrage P2(AR) est ainsi informé qu'une commande d'ouverture de session d'application devrait lui être prochainement envoyée (premières données d'application) et peut déjà présélectionner dans des registres une liste d'applications autorisées pour le protocole de communication sans contact concerné, et une liste correspondante de points de destination Pi habilités à traiter ces applications.

A l'étape suivante S34, le contrôleur NFCC reçoit la première commande d'application, qui comprend l'identifiant d'application AID. Comme indiqué plus haut cette commande est par exemple la commande classique couramment utilisée "SELECT-FILE" ou "SELECT-AID". Il peut s'agir également d'une commande de type "SELECT-CARD" ou toute autre commande APDU contenant l'identifiant AID.

Au cours d'une étape S35, le contrôleur NFCC envoie cette commande au point d'arbitrage P2(AR). Celui-ci détermine alors qui doit gérer l'application identifiée. On suppose dans cet exemple de séquence que l'application doit être traitée par un point Pi situé dans l'un des processeurs hôtes HP1 ou HP3.

Dans ce cas, au cours d'une étape S36, le processeur HP2 envoie au contrôleur NFCC une commande "Acc. Granted(Pi(HPj))" (accès autorisé) comprenant la désignation du point de destination Pi, par exemple P1 ou P3, situé dans un processeur hôte HPj, ici HP1 ou HP3, qui est désigné pour traiter l'application. La commande "Acc. Granted(Pi(HPj))" peut être la commande d'ouverture de route décrite en Annexe 1, une commande spécifique d'ouverture de route que seul le point d'arbitrage P2(AR) est autorisé à émettre, ou encore un groupe de commandes incluant la commande d'ouverture de route décrite en Annexe 1.

Dès que la route est créée, par exemple au moyen d'une inscription dans une table de routage statique ou dynamique telle que prévue par le second aspect de l'invention, le contrôleur NFCC renvoie immédiatement la commande "Select File" au point de destination Pi, au cours d'une étape S37. En effet cette commande n'a pas été reçue pour l'instant par le point d'arbitrage. Elle doit donc être envoyée au point Pi pour initier la session d'application. Au cours d'une étape S38, le contrôleur NFCC reçoit une réponse "Resp." du point Pi, et renvoie cette réponse au processeur externe au cours d'une étape S39.

Aux cours de diverses étapes schématisées dans un souci de simplicité sous forme de deux étapes S40A et S40B, le point Pi et le processeur externe EXTP échangent des données d'application comprenant par exemple des commandes ("Appl. Com.") et des réponses ("Resp.") qui sont spécifiques à l'application. Au cours de la session d'application, le contrôleur NFCC agit comme un intermédiaire de routage mais demeure transparent pour les deux organes Pi, ExTP assurant la conduite de la session.

La session se termine au cours d'une étape S41, lorsque le contrôleur NFCC reçoit une commande de fin de communication du processeur externe, par exemple la commande classique "DESELECT". Au cours d'une étape S42, le contrôleur NFCC ferme le canal de routage vers le point Pi et notifie la fin de session et la fermeture de canal au point d'arbitrage P2(AR), par exemple au moyen d'un message "End Session".

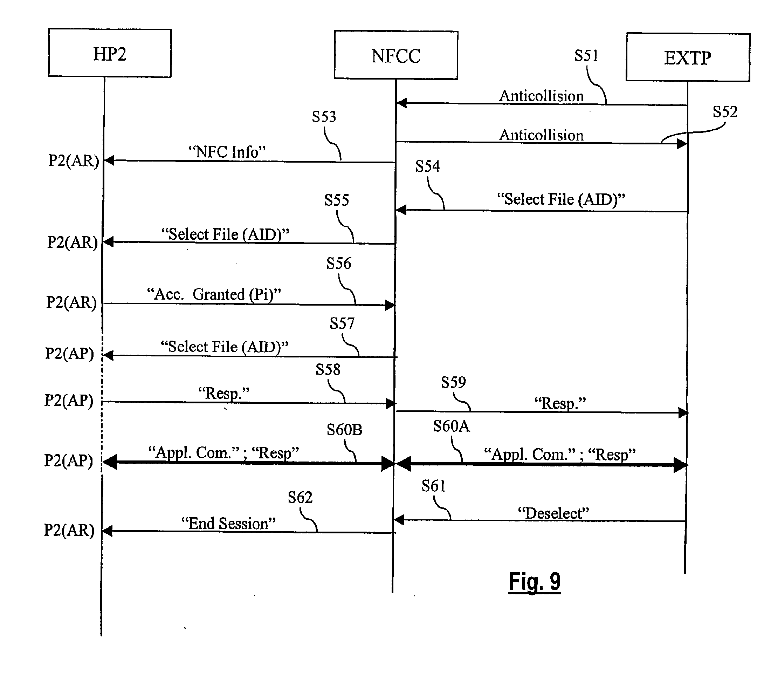

La figure 9 illustre un second exemple de séquence de routage de données entrantes selon l'invention. Cette séquence de routage comprend des étapes S51, S52, S53, S54, S55, S56, S57, S58, S59, S60A, S60B, S61, S62 similaires aux étapes S31, S32, S33, S34, S35, S36, S37, S38, S39, S40A, S40B, S41, S42 du premier exemple de séquence de routage, et se distingue seulement de celui-ci par le fait qu'à l'étape de sélection du point de destination (étape S56, "Acc. Granted"), le point d'arbitrage P2 (AR) désigne un point Pi qui est situé dans le processeur HP2, désigné P2(AP), dédié au traitement de l'application. En d'autres termes, le processeur HP2 décide qu'il doit traiter lui-même l'application concernée. Le contrôleur NFCC renvoie toutefois la commande Select File (AID) au point P2 (AP), en supposant que le point d'arbitrage P2 (AR) ne communique pas cette information au point de traitement P2 (AP), bien qu'étant localisé dans le même processeur (les couches logicielles applicatives et les couches logicielles de gestion étant supposées ici indépendantes et cloisonnées, y compris lorsqu'elles sont exécutées par le même processeur).

Dans encore un autre exemple de séquence non illustré sur les figures, le point d'arbitrage P2(AR) décide que la demande d'ouverture de session d'application doit être rejetée, soit parce qu'il ne connaît pas l'application concernée (aucun programme de traitement n'étant prévu), soit parce qu'il a été configuré par l'opérateur pour ne pas traiter cette application (cas d'une application payante non souscrite par le détenteur de la carte SIM/processeur HP2). Dans le premier cas, le point d'arbitrage P2 (AR) ne renvoie pas de réponse et le contrôleur NFCC ne renvoie pas de réponse non plus au processeur externe. Ce dernier interrompt la communication avec le chipset NFC au terme d'une période d'attente prévue par l'application (i.e. par le programme de l'application exécuté par le processeur externe). Dans le second cas, et si l'application prévoit une réponse de refus, le point d'arbitrage P2 (AR) envoie la réponse de refus au contrôleur NFCC qui la répercute au processeur externe.

Il a été implicitement supposé dans ce qui précède que le contrôleur NFCC n'est pas configuré pour acheminer par défaut au point d'arbitrage P2(AR) toutes les données d'application entrantes suivantes, et qu'il est configuré pour n'acheminer au point d'arbitrage que la première commande reçue après la séquence d'anticollision, cette première commande étant supposée contenir l'identificateur d'application AID attendu. Ainsi, s'il advient que le point d'arbitrage P2(AR) ne renvoie pas la commande "Acc. Granted" au contrôleur NFCC après que celui-ci lui a transmis la première commande d'application, le contrôleur NFCC ne lui transmet plus aucune commande d'application, ce qui implique que la communication engagée avec le processeur externe sera rompue.

Dans une variante de réalisation du procédé, le processeur est configuré pour acheminer au point d'arbitrage P2(AR) toutes les données reçues, et ce tant que ce dernier ne lui a pas renvoyé la commande "Acc. Granted" permettant de créer une nouvelle route pour les données entrantes. Cette variante de réalisation permet de gérer d'éventuelles applications dans lesquelles des commandes génériques seraient émises par le processeur externe avant que la commande identifiant l'application ne soit reçue. Dans ce cas, et à titre de précaution, toutes les commandes ou données reçues sont mémorisées dans un circuit tampon par le contrôleur NFC, et sont renvoyées ensuite au point de destination Pi désigné par le point d'arbitrage.

Le procédé de routage selon l'invention repose sur une identification de l'application par analyse des premières données entrantes et peut également être mis en oeuvre lorsque l'application concernée n'utilise pas de commande d'identification comprenant le champ AID, ou lorsque l'application concernée est supportée par un protocole ne prévoyant pas de commande comprenant un champ d'identification de l'application ("applications sans AID"). Par exemple, le protocole ISO 15693 ne prévoit pas d'AID et les applications utilisant ce protocole ne peuvent donc s'identifier clairement. Selon l'invention, on utilise alors un moyen dérivé pour identifier l'application car l'expérience montre que toute application sans AID est néanmoins identifiable par un faisceau de paramètres, à commencer par la première commande envoyée qui est généralement personnalisée dans les applications sans AID. Sont également utilisables comme paramètres complémentaires d'identification de l'application, le protocole utilisé et le mode de fonctionnement du circuit d'interface sans contact CLINT.

Ainsi, comme le point d'arbitrage P2(AR) reçoit au moins la première commande et est informé des paramètres de communication par le contrôleur NFCC ("NFC Info", étape S33), le point d'arbitrage est en mesure d'identifier l'application correspondante en commençant par une analyse des premières données reçues et, si nécessaire, en complétant cette analyse au moyen des paramètres de communication (mode de fonctionnement Mi du circuit d'interface CLINT et protocole PTi des données entrantes). Une table de correspondance entre ces divers paramètres et les applications correspondantes, ainsi que les points de traitement Pi correspondants, peut à cet effet être fournie au point d'arbitrage par les opérateurs en charge de la mise en oeuvre des applications. Ainsi, l'analyse des données entrantes pour l'identification de l'application n'est pas limitée à une extraction de l'AID.

De préférence, lorsque des moyens de sécurité sont disponibles dans le chipset NFC, le procédé selon l'invention n'est exécuté par le point d'arbitrage que si le point de destination Pi des données d'application a été autorisé à gérer cette application en présentant un certificat valide (Cf. premier aspect de l'invention). Dans le cas contraire, le point d'arbitrage ne transmet pas la commande "Acc. Granted" permettant de créer une route vers ce point de destination. Par ailleurs, une clé de session (SESK) définie au cours de l'authentification du processeur HP2 peut être utilisée pour sécuriser les échanges de données d'administration entre le contrôleur NFCC et le point d'arbitrage P2(AR), avant l'ouverture du canal de communication vers le point Pi.

Le tableau 3 en Annexe 2 décrit un exemple simplifié de table de routage de données entrantes comprenant des chemins de données préenregistrés mais activés seulement à la demande du point d'arbitrage P2 (AR) du processeur HP2, au moyen de la commande interne "Acc. Granted" envoyée au contrôleur NFCC. A cet effet une colonne "occupé" est prévue pour chaque chemin de données. Cette colonne comprend par défaut un drapeau ayant une valeur inactive, par exemple 0, signifiant que le chemin de données correspondant n'est pas validé. Après activation par le processeur HP2 au moyen de la commande interne "Acc. Granted", le drapeau est mis à 1. A noter que les chemins de données vers un point Pi du processeur HP2 ne sont pas mentionnés dans la table dans un souci de simplification. La table sera en pratique d'une taille plus importante si tous les points de destination possibles Pi y figurent. Par ailleurs le point source Id(Pc) du routage mentionné dans la table est un point source virtuel considéré comme localisé dans le circuit d'interface CLINT, bien que correspondant à un point éloigné situé dans un processeur externe. En effet, vu sous l'angle de la technique de routage proposée par l'invention, les données d'application émises par le processeur externe sont vues comme si elles étaient émises par le circuit d'interface CLINT, lequel est en réalité transparent pour l'application. Par contre, vu sous l'angle de l'application, il n'existe qu'un canal de communication unique établi entre le point de traitement Pi et le processeur externe, bien que ce canal de communication soit en réalité formé d'une part par le canal de routage interne créé entre le circuit d'interface CLINT et le point de traitement Pi, et d'autre part par le canal d'émission/réception de données sans contact créé entre le circuit d'interface CLINT et le processeur externe.

Cette table de routage statique peut être remplacée par une table de routage dynamique, qui est initialement vide. La table de routage dynamique dédiée aux données entrantes est remplie ou vidée de façon dynamique par le contrôleur NFCC au rythme des autorisations accordées et des routages demandés par le point d'arbitrage, et au rythme des fermetures de canaux de routage en réponse à la commande DESELECT.

L'homme de l'art notera toutefois que le procédé de routage de données entrantes qui vient d'être décrit est indépendant de l'utilisation d'une table de routage. Le routage des données entrantes peut être mis en oeuvre en utilisant un protocole HCI classique, c'est-à-dire sans utilisation d'une table de routage et de trames de données ayant un champ d'en-tête de longueur réduite. Le routage peut également être mis en oeuvre par tout autre moyen classique, sans utilisation d'un protocole HCI, par exemple en formant des chemins de données hardware au moyen de circuits de multiplexage ou des portes logiques contrôlés par des signaux fournis par le contrôleur NFC après autorisation du point d'arbitrage.

Egalement, l'authentification du processeur comprenant le point d'arbitrage du routage des données entrantes est une caractéristique de l'invention qui, bien qu'importante en pratique pour des raisons de sécurité, n'en demeure pas moins optionnelle. Le routage des données entrantes doit en effet être sécurisé dès lors que les sessions d'application correspondent à des services payants. Toutefois, essentiellement, le routage des données entrantes selon l'invention résout également un problème technique de rationalisation du traitement des flux de données, et un problème d'économie d'énergie électrique. Par exemple, si plusieurs processeurs hôtes devaient traiter en même temps toutes les données entrantes, il en résulterait une consommation d'énergie électrique plus importante. Des méthodes de décision collective devraient également être prévues pour que les processeurs s'entendent sur la question de savoir quel processeur doit traiter les données entrantes. Le procédé selon l'invention n'est donc pas uniquement destiné à être mis en oeuvre dans un chipset NFC sécurisé et résout un problème technique général s'étendant au-delà des questions de sécurité.

Exemple d'architecture matérielle et logicielle du composant NFC permettant de mettre en oeuvre le procédé selon l'invention

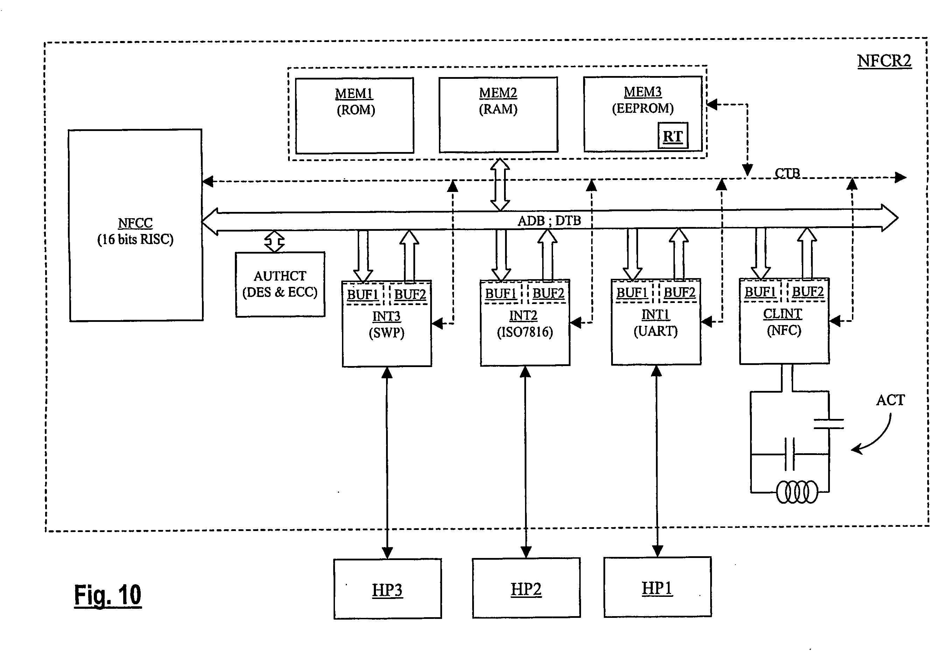

La figure 10 représente un exemple d'architecture matérielle du composant NFCR2 de la figure 4. Le composant comprend :
- le contrôleur NFCC et le circuit d'interface CLINT déjà décrits,
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM dans laquelle la table de routage RT est enregistrée,
- un circuit d'authentification et de correction d'erreur AUTHCT comprenant des algorithmes DES (Data Encryption Standard) et ECC (Elliptic Curve Cryptography), ou d'autres algorithmes de cryptographie,
- un port de connexion INT1 de type UART (Universal Asynchronous Receiving Transmitting), auquel le processeur hôte HP1 est ici connecté,
- un port de cormexion INT2 de type ISO 7816 auquel le processeur hôte HP2 est ici connecté (le processeur HP2 étant supposé ici être une carte SIM),
- un port de connexion INT3 de type SWP (Single Wire Protocol) permettant de connecter le processeur hôte HP3,
- un bus de données DTB et un bus d'adresse ADB reliant le plan mémoire, le contrôleur NFCC, le circuit d'interface CLINT et les ports INT1, INT2, INT3, et
- un bus de contrôle CTB permettant au contrôleur NFCC de contrôler et d'accéder à ces divers éléments en lecture et/ou écriture.

Le circuit d'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le contrôleur NFCC ou le circuit d'interface CLINT s'effectue ainsi par blocs de données de la taille des tampons BUF1, BUF2, et est cadencé par le contrôleur NFCC.

Il est à noter que la table de routage n'est accessible que par le contrôleur NFCC. Par conséquent, la table de routage ne peut être modifiée que si le processeur hôte HP2 est authentifié par le contrôleur NFCC.

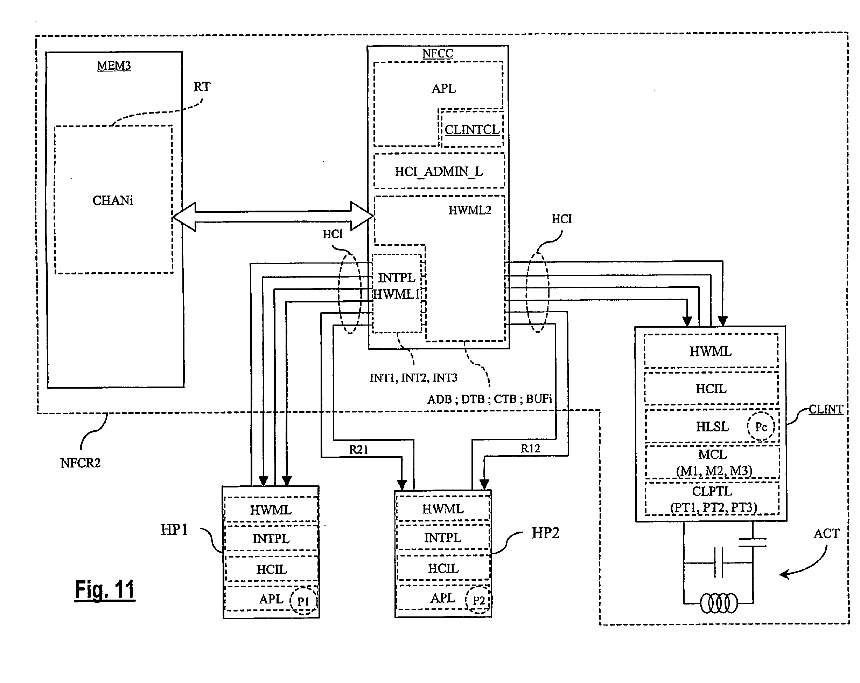

La figure 11 représente un exemple d'architecture logicielle du composant NFCR2 et des processeurs hôtes HP1, HP2. Dans un souci de simplicité, n'ont pas été représentés les modules logiciels correspondant au routage des données entrantes suivant le troisième aspect de l'invention. Cette architecture logicielle comprend, pour le composant NFC et les processeurs hôtes du système, plusieurs couches logicielles allant du niveau le plus bas (couche liaison de données) au niveau le plus haut (couche application). La représentation qui est faite de ces couches logicielles en figure 11 est simplifiée par rapport à l'architecture logicielle réelle d'un chipset NFC selon l'invention mais est suffisante pour l'homme de l'art souhaitant réaliser l'invention de la manière proposée ici.

Chaque processeur hôte HP1, HP2 comprend au moins quatre couches logicielles, dans un ordre de niveau croissant :
- une couche de plus bas niveau HWML (Hardware Management Layer) qui gère le fonctionnement des éléments matériels (hardware) permettant aux processeurs hôtes d'échanger des données avec le contrôleur NFCC,. Il s'agit par exemple de la couche de gestion de l'interface UART pour le processeur HP1 et de la couche de gestion de l'interface ISO7816 pour le processeur HP2.
- une couche INTPL (Interface Protocol Layer) qui gère le protocole des ports de communication INT1, INT1, INT3. Il s'agit par exemple de la couche de gestion du protocole UART pour le processeur HP1 et de la couche de gestion du protocole ISO7816 pour le processeur HP2.
- une couche HCIL (HCI Layer) qui gère le protocole HCI selon l'invention, c'est-à-dire qui gère la création d'un canal de communication en générant les commandes décrites plus haut et en Annexe 1 et en traitant les messages de réponse à de telles commandes. Cette couche repose sur les couches INTPL et HWML qui sont quasi transparentes pour elle.
- une couche APL (Application Layer) de haut niveau qui gère les applications RFID telles que celles représentées en figures 2 et 4 (lecture d'une carte à puce ou d'une étiquette électronique, émulation d'une carte à puce, dialogue en mode "device-to-device" avec un processeur externe pour échanger des fichiers, etc..). Cette couche peut comprendre plusieurs programmes application, chacun étant sécurisé ou non (selon les ressources internes du processeur) et chacun utilisant tel type de protocole PTi et tel mode de fonctionnement Mi du circuit d'interface CLINT. Ainsi, cette couche de haut niveau repose sur les couches HWML, INTPL et la couche HCIL selon l'invention, qui sont quasi transparentes pour elle. La rapidité du transfert des données à travers les chemins de données crées grâce à la couche HCIL selon l'invention entraîne avantageusement un accroissement sensille des performances de la couche application APL.

Les points source ou destination P1 et P2 localisés dans les processeurs hôtes peuvent être des "services" (des applications déterminées). Ces services peuvent demander au contrôleur NFCC, chacun indépendamment de l'autre, de créer des chemins de données pour utiliser simultanément le circuit d'interface CLINT (sous réserve de collision de modes et de protocoles, comme indiqué plus haut). Ainsi, cette architecture logicielle permet de mettre en oeuvre un service en tant que points source ou destination d'un chemin de données, et permet la création simultanée de plusieurs chemins de données entre deux entités, par exemple entre deux processeurs hôtes ou entre un processeur hôte et le circuit d'interface CLINT.

De façon correspondante , le contrôleur NFCC comporte les couches logicielles suivantes :
- deux couches HWML1 et INTPL du même type que les couches HWML et INTPL présentes dans les processeurs hôtes. Dans un souci de simplification du schéma, ces couches sont représentées dans le contrôleur NFCC mais sont en réalité localisées dans les ports INT1 et INT2, qui sont considérés comme faisant partie du contrôleur, ainsi que les bus ADB, DTB, CIB. En effet le traitement des protocoles UART et 7816 est assuré ici dans les ports INT1, INT2, qui mettent à la disposition du contrôleur leurs tampons d'entrée et de sortie BUF1, BUF2 via les bus ADB, DTB, CTB.
- une autre couche de bas niveau HWML2 qui permet au contrôleur d'écrire les tampons BUF1 et de lire les tampons BUF2, via les bus ADB, DTB, CTB, en décomposant les trames de données ou les commandes en blocs de données de même taille que les tampons.
- une couche HCI-ADMIN-L ou couche d'administration du protocole HCI, qui dialogue avec les couches HCIL des processeurs hôtes HP1, HP2 en tant qu'administrateur du routage. Ainsi cette couche exécute les tâches d'attribution de chemins de données décrites plus haut, et accède à la table de routage RT en lecture et en écriture via la couche de bas niveau HWML2.
- une couche CLINTCL (Contactless Interface Control Layer) qui gère le circuit d'interface CLINT et qui indique à celui-ci le mode Mi dans lequel il doit se placer et le protocole PTi à utiliser pour émettre des données dans un canal de communication sans contact. A cet effet, la couche CLINTCL exploite les paramètres PTi et Mi présents dans la table de routage. Plus particulièrement, la couche HCI-ADMIN-L écrit ces paramètres dans la table de routage en réponse à des commandes d'ouverture de chemins de données, tandis que la couche CLINTCL recherche ces paramètres dans la table en utilisant comme index le numéro de canal des trames de données envoyées par les processeurs hôtes HP1, HP2. Cette couche contrôle également le circuit d'interface CLINT en mode réception de données sans contact et lui demande cycliquement d'effectuer un balayage des modes (mode lecteur, mode émulation et mode "device") et, dans chaque mode, de rechercher des données entrantes. Cela signifie que le circuit d'interface CLINT émet à intervalles réguliers un champ magnétique pour interroger d'éventuelles cartes ou étiquettes sans contact (ou autres objets portatifs fonctionnant sans contact) qui pourraient être présentes dans son champ d'interrogation. Le circuit d'interface CLINT se place également à intervalles réguliers dans un mode d'écoute (mode "émulation") pour détecter si un lecteur en mode actif envoie des messages d'interrogation.
- une couche optionnelle APL qui peut gérer elle-même des applications, à l'instar des processeurs hôtes. En effet, bien que cela n'ait pas été décrit jusqu'à présent pour rester dans l'objet de l'invention, des applications peuvent également être prises en charge par le composant NFC lui-même. Dans ce cas, la communication de données entre le contrôleur NFCC et le circuit d'interface CLINT peut être faite en passant par le canal de communication HCI selon l'invention, si le circuit d'interface CLINT est équipé de la couche INTPL, ce qui est le cas dans le mode de réalisation représenté en figure 11.

Enfin, le circuit d'interface CLINT comporte les couches logicielles suivantes :
- du côté du contrôleur NFCC, une couche de bas niveau HWML équivalente à la couche HWML2 du contrôleur NFCC, pour gérer les tampons de données BUF1, BUF2 via les bus ADB, DTB, CTB.
- une couche HCIL (comme indiqué ci-dessus) qui rend le circuit d'interface CLINT compatible avec le protocole HCI selon l'invention et offre de plus grandes possibilités d'implémentation de l'invention (notamment le fait que le circuit d'interface CLINT génère lui-même les trames de données pour acheminer aux processeurs hôtes des données reçues via un canal de communication sans contact).
- du coté du circuit d'antenne ACT, des couches CLPTL (Contactless Protocol Layer) et MCL (Mode Control Layer) qui assurent le contrôle ou le traitement des signaux électriques appliqués au circuit d'antenne ACT ou reçus par celui-ci, pour la mise en oeuvre des modes de fonctionnement M1, M2, M3 et des protocoles PT1, PT2, PT3.
- entre les couches situées du coté du contrôleur et les couches situées du coté du circuit d'antenne, une couche centrale de haut niveau HLSL (High Level Service Layer) qui permet de définir dans le circuit d'interface CLINT plusieurs points source ou destination Pc pour créer plusieurs chemins de données avec des points P1, P2 multiples dans les couches application APL des processeurs hôtes HP1, HP2. Bien entendu, cette architecture de haut niveau est optionnelle et des points multiples Pc localisés virtuellement dans le circuit d'interface CLINT peuvent être gérés par le contrôleur NFCC.

Il apparaîtra clairement à l'homme de l'art que la présente invention est susceptible de diverses variantes de réalisation. Ainsi l'invention n'est pas limitée à un système comportant plusieurs processeurs hôtes et un composant NFC. Elle couvre également le contrôle de l'exécution d'applications dans un système ayant un seul processeur hôte et exécutant plusieurs applications amenées à communiquer entre elles.

Par ailleurs les processeurs hôtes pourront, dans un proche avenir, être intégrés sur le même support que le composant NFC lui-même. La notion de "chipset" au sens de l'invention n'est donc pas limitée à un ensemble de puces réalisées sur des microplaquettes de semiconducteur différentes et couvre de façon générale le cas où tous les organes ou processeurs formant le chipset partagent le même substrat pour former une puce unique. Ces organes ou processeurs peuvent eux-mêmes être totalement virtuels et peuvent correspondre à des programmes distincts, ou couches logicielles, exécutés par le même processeur ou par un groupe de processeurs en réseau. L'invention s'applique donc de façon générale à un système NFC. Le terme "système" inclut un chipset formé par un jeu de puces séparées, un système comprenant un jeu de circuits intégrés implantés sur un même substrat, et un système dont les organes constitutifs, notamment les processeurs hôtes et le contrôleur NFC, sont des organes virtuels bien que fonctionnellement distincts les uns des autres et interagissant les uns avec les autres.

Les trois aspects de l'invention sont indépendants les uns des autres comme cela a été souligné plus haut, bien que leur implémentation conjointe soit avantageuse du fait que chaque aspect de l'invention répond à un problème technique particulier. L'ordre dans lequel ces trois aspects ont été décrits ne correspond à aucune hiérarchie, aucun ordre d'importance ou de dépendance, et a seulement été retenu pour des raisons pratiques de présentation de l'invention d'une manière facilitant sa compréhension. Egalement, comme cela a déjà été indiqué, le processeur HP2 dédié au contrôle d'application pourrait être non sécurisé. En effet, certaines applications non sensibles peuvent ne pas requérir un niveau de sécurité élevé.

Egalement, les formats des commandes décrits ici ne le sont qu'à titre d'exemple. En particulier, le bit "T" peut être supprimé pour obtenir 128 canaux de routage au lieu de 64 tout en conservant un champ d'entête de 8 bits. De même, le format de la table de routage est fourni à titre d'exemple, la table pouvant être gérée dynamiquement ou statiquement, ou les deux à la fois.

### Annexe 1 faisant partie intégrante de la description

### A/ Exemples de commandes de routage

### Format général

| | En-tête | | | Paramètres |
|---|---|---|---|---|
| Taille | 1 bit | 1 bit | 6 bits | 2 ou 3 octets |
| Signifie ou contient | T | L | CCMD | Selon commande |
| valeur | 1 | 0-1 | 0-31 | |

| | | | | |
|---|---|---|---|---|
| T = Type ; T = 1 pour une commande ou une réponse à une commande L = longueur du champ "paramètres" : 2 octets si L = 0 ou 3 octets si L = 1 ; CCMD = code de la conmande ou du message | | | | |

### Exemples de commades et de messages de réponse:

### Commande "Création d'une Route":

| | En-tête | | | Paramètres | | | |
|---|---|---|---|---|---|---|---|
| Taille | 1 bit | 1 bit | 6 bits | 1 octet | 1 octet | 4 bits | 4 bits |
| Signifie ou contient | T | L | CCMD | IDsp | IDdp | Mi | PTi |
| Valeur | 1 | 1 | VAL1 | 0-255 | 0-255 | 0-15 | 0-15 |

| | | | | | | | |
|---|---|---|---|---|---|---|---|
| VAL1 = valeur du code de la commande IDsp = Identifiant du point source de la commande IDdp = Identifiant du point de destination de la route Mi = mode de fonctionnement du circuit d'interface CLINT (M1, M2 ou M3) PTi = protocole de commmication sans contact (PT1, PT2 ou PT3) | | | | | | | |

### Message "Création Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL2 | 0-255 | 0-63 | 0-3 |

| | | | | | | |
|---|---|---|---|---|---|---|
| VAL2 = valeur du code de la réponse IDsp = Identifiant du point source de la comnande CHANi = Numéro de la route attribuée (Numéro de Canal) RFU = Réservé pour utilisation future | | | | | | |

### Message "Erreur de Création Route"

| | En-tête | | | Paramètres | |
|---|---|---|---|---|---|
| Taille | 1 bit | 1 bit | 6 bits | 1 octet | 1 octet |
| Signifie ou contient | T | L | CCMD | IDsp | IDdp |
| Valeur | 1 | 0 | VAL3 | 0-255 | 0-255 |

| | | | | | |
|---|---|---|---|---|---|
| VAL3 = valeur du code du message IDsp = Identifiant du point source de la commande IDdp = Identifiant du point de destination de la route Mi = mode de fonctionnement du circuit d'interface (M1, M2 ou M3) PTi = protocole de communication sans contact (PT1, PT2 ou PT3) | | | | | |

### Commande "Modification de Route" ou "Suppression de Route"

| | En-tête | | | Paramètres | | | | |
|---|---|---|---|---|---|---|---|---|
| Taille | 1 bit | 1 bit | 6 bits | 1 octet | 6 bits | 2 bits | 4 bits | bits |
| Signifie ou contient | T | L | CCMD | IDsp | CHANi | RFU | Mi | PTi |
| Valeur | 1 | 1 | VAL4 ou VAL5 | 0-255 | 0-63 | 0-3 | 0-15 | 0-15 |

| | | | | | | | | |
|---|---|---|---|---|---|---|---|---|
| VAL4 ou VAL5 = valeur du code de chaque commande IDsp = Identifiant du point source de la commande CHANi = Numéro de la route à modifier ou supprimer RFU = Réservé pour utilisation future Mi = mode de fonctionnement du circuit d'interface (M1, M2 ou M3) PTi = protocole de communication sans contact (PT1, PT2 ou PT3) | | | | | | | | |

### Messages "Modification de Route OK " ou "Suppression de Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL6 ou VAL7 | 0-255 | 0-63 | 0-3 |

| | | | | | | |
|---|---|---|---|---|---|---|
| VAL6 ou VAL 7 = valeur du code de chaque message IDsp = Identifiant du point source de la commande CHANi = Numéro de la route modifiée ou supprimée RFU = Réservé pour utilisation future | | | | | | |

### Messages "Erreur de Modification de Route" ou "Erreur de Suppression de Route"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL8 ou VAL9 | 0-255 | 0-63 | 0-3 |

| | | | | | | |
|---|---|---|---|---|---|---|
| VAL8 ou VAL 9 = valeur du code de chaque message IDsp = Identifiant du point source de la commande CHANi = Numéro de la route concernée RFU = Réservé pour utilisation future | | | | | | |

### B/ Exemples de trames de données

T = 0 pour une trame de données ou une réponse à une trame de données ; L = 0 si trame de 256 octets de données ; L = 1 si trame de 64 Koctets de données ; DL= Longueur des données en octets ; DATA = Données d'application ; CHANi = numéro de canal de routage.

### Trame de 255 octets de données

| | En-tête | | | | |
|---|---|---|---|---|---|
| Taille | 1 bit | 1 bit | 6 bits | 1 octet | 0 à 255 octets |
| Signifie ou contient | T | L | CHANi | DL | DATA |
| Valeur | 0 | 0 | 0-63 | 255 | |

### Trame de 64K octets de données

| | En-tête | | | | |
|---|---|---|---|---|---|
| Taille | 1 bit | 1 bit | 6 bits | 2 octets | 0 à 65535 octets |
| Signifie ou contient | T | L | CHANi | DL | DATA |
| Valeur | 0 | 1 | 0-63 | 65535 | |

### Message "Accusé de réception sans erreur"

| Taille | 1 bit | 1 bit | 6 bits |
|---|---|---|---|
| Signifie ou contient | T | Pas d'erreur | CHANi |
| Valeur | 0 | 0 | 0-63 |

### Message "erreur de réception"

| Taille | 1 bit | 1 bit | 6 bits | 1 octet |
|---|---|---|---|---|
| Signifie ou contient | T | Erreur | **CHANi** | Code de l'erreur |
| Valeur | 0 | 1 | 0-63 | 0-255 |

### Annexe 2 faisant partie intégrante de la description - Exemples de tables de routage

**Tableau 1 : Exemple de table de routage dynamique avec des points sources localisés dans HP1 ou HP2**

| | | | | **IDdp** | | |
|---|---|---|---|---|---|---|
| **CHANi** | **IDsp** | **PTi** | **Mi** | **Envoyer** | **Notifier** | **Commentaires** |
| 1 | ID(P1) | PT1 | M1 | ID (Pc) | ID(P2) | Processeur HP1 vers interface CLINT en mode lecteur ISOA |
| 2 | ID(P1) | PT2 | M1 | ID(Pc) | - | Processeur HP1 vers interface CLINT en mode lecteur ISOB |
| 3 | ID(P1) | PT3 | M1 | ID(Pc) | - | Processeur HP1 vers interface CLINT en mode lecteur ISO15 |
| 4 | ID(P1) | PT1 | M3 | ID(Pc) | ID(P2) | Processeur HP1 vers interface CLINI en mode "device" ISOA |
| 5 | ID(P1) | PT2 | M3 | ID(Pc) | - | Processeur HP1 vers interface CLINT en mode "device" ISOB |
| 6 | ID(P1) | PT3 | M3 | ID(Pc) | - | Processeur HP1 vers interface CLINT en mode "device" ISO15 |
| 7 | ID(P1) | - | - | ID(P2) | | Processeur HP1 vers carte SIM (HP2) |
| 8 | ID(P2) | - | - | ID(P1) | - | Carte SIM (HP2) vers processeur HP1 |
| 9 | ID(P2) | PT1 | M1 | ID(Pc) | - | Carte SIM (HP2) vers interface CLINT en mode lecteur ISOA |
| 10 | ID(P2) | PT2 | M1 | ID(Pc) | ID(P2) | Carte SIM (HP2) vers interface CLINT en mode lecteur ISOB |
| 11 | ID(P2) | PT3 | M1 | ID(Pc) | ID(P2) | Carte SIM (HP2) vers interface CLINT en mode lecteur ISO15 |
| 12 | ID(P2) | PT1 | M3 | ID(Pc) | - | Carte SIM (HP2) vers interface CLINT en mode "device" ISOA |
| 13 | ID(P2) | PT2 | M3 | ID(Pc) | ID(P2) | Carte SIM (HP2) vers interface CLINT en mode "device" ISOB |
| 14 | TD(P2) | PT3 | M3 | ID(Pc) | ID(P2) | Carte SIM (HP2) vers interface CLINT en mode "device" ISO15 |

**Tableau 2 : Exemple de table de routage préenregistrée avec des points sources localisés dans HP1 ou HP2**

| | | | | **IDdp** | | | | |
|---|---|---|---|---|---|---|---|---|
| **CHANi** | **IDsp** | **PTi** | **Mi** | **Envoyer** | **Notifier** | **Autorisé** | **occupé** | **Commentaires** |
| 1 | ID(P1) | PT1 | M1 | ID(Pc) | ID(P2) | 1 | 1 | Processeur HP1 vers interface CLINT en mode lecteur ISOA |
| 2 | ID(P1) | PT2 | M1 | ID(Pc) | - | 0 | 0 | Processeur HP1 vers interface CLINT en mode lecteur ISOB |
| 3 | ID(P1) | PT3 | M1 | ID(Pc) | - | 0 | 0 | Processeur HP1 vers interface CLINT en mode lecteur ISO15 |
| 4 | ID(P1) | PT1 | M3 | ID(Pc) | ID(P2) | 0 | 0 | Processeur HP1 vers interface CLINT en mode "device" ISOA |
| 5 | ID(P1) | PT2 | M3 | ID(Pc) | - | 0 | 0 | Processeur HP1 vers interface CLINT en mode "device" ISOB |
| 6 | ID(P1) | PT3 | M3 | ID(Pc) | - | 0 | 0 | Processeur HP1 vers interface CLINT en mode "device" ISO15 |
| 7 | ID(P1) | - | - | ID(Pc) | | 1 | 1 | Processeur HP1 vers carte SIM (HP2) |
| 8 | ID(P2) | - | - | ID(P1) | - | 0 | 0 | Carte SIM (HP2) vers processeur HP1 |
| 9 | ID(P2) | PT1 | M1 | ID(Pc) | - | 0 | 0 | Carte SIM (HP2) vers interface CLIMAT en mode lecteur ISOA |
| 10 | ID(P2) | PT2 | M1 | ID(Pc) | ID(P2) | 0 | 0 | Carte SIM (HP2) vers interface CLINT en mode lecteur ISOB |
| 11 | ID(P2) | PT3 | M1 | ID(Pc) | ID(P2) | 0 | 0 | Carte SIM (HP2) vers interface CLINT en mode lecteur IS015 |
| 12 | ID(P2) | PT1 | M3 | ID(Pc) | - | 1 | 1 | Carte SIM (HP2) vers interface CLINT en mode "device" ISOA |
| 13 | ID(P2) | PT2 | M3 | ID(Pc) | ID(P2) | 0 | 0 | Carte SIM (HP2) vers interface CLINT en mode "device" ISOB |
| 14 | ID(P2) | PT3 | M3 | ID(Pc) | ID(P2) | 0 | 0 | Carte SIM (HP2) vers interface CLINT en mode "device" ISO15 |

**Tableau 3 : Exemple de table de routage statique pour le routage de données entrantes**

| **CHANi** | **IDsp** | **PTi** | **Mi** | **Envoyer** | **Occupé** | **Commentaires** |
|---|---|---|---|---|---|---|
| 40 | ID(Pc) | PTi | M1 | ID(Pi(HP1) | | Interface CLINT en mode lecteur ISO A vers point "Pi" de HP1 |
| 41 | ID(Pc) | PT2 | M1 | ID(Pi(HP1)) | | Interface CLINT en mode lecteur ISO B vers point "Pi" de HP1 |
| 42 | ID(Pc) | PT3 | M1 | ID(Pi(HP1)) | | Interface CLINT en mode lecteur ISO 15693 vers point "Pi" de HP1 |
| 43 | ID(Pc) | PT1 | M2 | ID(Pi(HP1)) | | Tnterface CLINT en mode émulation ISO A vers point "Pi" de HP1 |
| 44 | ID(Pc) | PT2 | M2 | ID(Pi(HP1)) | | Interface CLINT en mode émulation ISO B vers point "Pi" de HP1 |
| 45 | ID(Pc) | PT3 | M2 | ID(Pi(HP1)) | | Interface CLINT en mode émulation ISO 15693 vers point "Pi" de HP1 |
| 46 | ID(Pc) | PT1 | M3 | ID(Pi(HP1)) | | Interface CLINT en mode "device" ISO A vers point "Pi" de HP1 |
| 47 | ID(Pc) | PT2 | M3 | ID(Pi(HP1)) | | Interface CLINT en mode "device" ISO B vers point "Pi" de HP1 |
| 48 | ID(Pc) | PT3 | M3 | ID(Pi(HP1)) | | Interface CLINT en mode "device" ISO 15693 vers point "Pi" de HP1 |
| 49 | ID(Pc) | PT1 | M1 | ID(Pi(HP3)) | | Interface CLINT en mode lecteur ISO A vers point "Pi" de HP3 |
| 50 | ID(Pc) | PT2 | M1 | ID(Pi(HP3)) | | Interface CLINT en mode lecteur ISO B vers point "Pi" de HP3 |
| 51 | ID(Pc) | PT3 | M1 | ID(Pi(HP3)) | | Interface CLINT en mode lecteur ISO 15693 vers point "Pi" de HP3 |
| 52 | ID(Pc) | PT1 | M2 | ID(Pi(HP3)) | | Interface CLINT en mode émulation ISO A vers point "Pi" de HP3 |
| 53 | ID(Pc) | PT2 | M2 | ID(Pi(HP3)) | | Interface CLINT en mode émulation ISO B vers point "Pi" de HP3 |
| 54 | ID(Pc) | PT3 | M2 | ID(Pi(HP3)) | | Interface CLINT en mode émulation ISO 15693 vers point "Pi" de HP3 |
| 55 | ID(Pc) | PT1 | M3 | ID(Pi(HP3)) | | Interface CLINT en mode "device" ISO A vers point "Pi" de HP3 |
| 56 | ID(Pc) | PT2 | M3 | ID(Pi(HP3)) | | Interface CLINT en mode "device" ISO B vers point "Pi" de HP3 |
| 57 | ID(Pc) | PT3 | M3 | ID(Pi(HP3)) | | Interface CLINT en mode "device" ISO 15693 vers point "Pi" de HP3 |

## Revendications

1. Procédé de routage de données d'application entrantes ou sortantes dans un système NFC (NFCC, CLINT, HP1, HP2, HP3) comprenant un circuit d'interface NFC (CLINT) assurant l'émission et la réception de données sans contact, un processeur NFC (NFCC) associé au circuit d'interface NFC et au moins deux processeurs hôtes (HP1, HP2, HP3) du processeur NFC, dans lequel le routage de données d'application entrantes reçues par le circuit d'interface (CLINT) comprend les étapes consistant à :
- faire analyser des premières données d'application entrantes ("Select File") par un point d'arbitrage (P2(AR)) afin que celui-ci identifie l'application au titre de laquelle les données sont envoyées au système NFC, et
- faire désigner par le point d'arbitrage (P2(AR)) un point (Pi, P2(AP)) de destination des données d'application et de traitement de l'application localisé dans un processeur hôte (HP1, HP2, HP3), et
- acheminer les données d'application entrantes suivantes au point de destination et de traitement (Pi, P2(AP)), et acheminer au circuit d'interface NFC des données d'application sortantes émises par le point de destination et de traitement (Pi, P2(AP)), **caractérisé en ce que** le point d'arbitrage (P2(AR)) pour le routage des données d'application entrantes est localisé dans un processeur hôte (HP2) du système NFC, et **en ce qu'**il comprend les étapes consistant à :
- acheminer les premières données d'application entrantes ("Select File") au point d'arbitrage (P2(AR)) localisé dans un processeur hôte (HP2), puis réacheminer les premières données d'application entrantes ("Select File") au point de destination et de traitement (Pi, P2(AP)) désigné par le point d'arbitrage.

2. Procédé selon la revendication 1, dans lequel l'analyse des premières données d'application entrantes par le point d'arbitrage (P2(AR)), afin d'identifier l'application, comprend l'extraction d'un identifiant d'application (AID) présent dans les données.

3. Procédé selon la revendication 1, dans lequel l'analyse des premières données d'application entrantes par le point d'arbitrage (P2(AR)), afin d'identifier l'application, est complétée par l'analyse de paramètres de fonctionnement du circuit d'interface NFC, tels le mode de fonctionnement du circuit d'interface ou le protocole de transmission de données sans contact dans lequel les données entrantes sont reçues.

4. Procédé selon l'une des revendications 1 à 3, dans lequel le routage des premières données d'application entrantes au point d'arbitrage (P2(AR)), le routage des données d'application entrantes suivantes au point de destination et de traitement ((P2(AP)), et le routage au circuit d'interface NFC des données d'application sortantes émises par le point de destination et de traitement, sont assurés par un organe de routage (NFCC) distinct du point d'arbitrage.

5. Procédé selon l'une des revendications 1 à 4, dans lequel le point d'arbitrage (P2(AR)) est localisé dans un processeur hôte (HP2) sécurisé du système NFC.

6. Procédé selon l'une des revendications 1 à 5, comprenant une étape d'authentification du processeur hôte (HP1, HP2, HP3) dans lequel est localisé le point de destination et de traitement (Pi, P2(A_{P})), et les données d'application entrantes suivantes ne sont pas acheminées au point de destination et de traitement si le processeur hôte n'a pas été valablement authentifié.

7. Procédé selon l'une des revendications 1 à 6, dans lequel les données d'application sont acheminées au sein du système NFC dans un canal de routage (CHANi) défini par un numéro de canal de routage et des paramètres de routage associés comprenant au moins un identifiant (IDsp) d'un point source et un identifiant (IDdp) d'un point de destination, et sont encapsulées dans une trame (DF) ayant un champ d'en-tête comprenant le numéro de canal de routage.

8. Système NFC (NFCC, CLINT, HP1, HP2, HP3) comprenant un circuit d'interface NFC (CLINT) assurant l'émission et la réception de données sans contact, un processeur NFC (NFCC) associé au circuit d'interface NFC, au moins deux processeurs hôtes (HP1, HP2, HP3) du processeur NFC, et un organe (NFCC) de routage de données au sein du système NFC, **caractérisé en ce que** :
- l'organe de routage (NFCC) est configuré pour traiter le routage de données d'application entrantes reçues via le circuit d'interface NFC, en acheminant au moins des premières données d'application entrantes à un point de destination localisé dans un processeur hôte (HP2) du système NFC et désigné comme point d'arbitrage (P2(AR)) du routage des données d'application entrantes,
- ledit point d'arbitrage (P2(AR)) est agencé pour analyser les premières données d'application entrantes afin d'identifier l'application au titre de laquelle les données sont envoyées au système NFC, et désigner à l'organe de routage (NFCC) un point (Pi, P2(AP)) de destination des données d'application et de traitement de l'application, et
- l'organe de routage (NFCC) est configuré pour réacheminer les premières données d'application entrantes ("Select File") au point de destination et de traitement (Pi, P2(AP)) désigné par le point d'arbitrage, puis acheminer les données d'application entrantes suivantes au point de destination et de traitement (Pi, P2(AP)) désigné par le point d'arbitrage, et acheminer au circuit d'interface NFC des données d'application sortantes émises par le point de destination et de traitement (Pi, P2(AP)).

9. Système selon la revendication 8, dans lequel, pour identifier l'application, le point d'arbitrage (P2(AR)) est agencé pour extraire un identifiant d'application (AID) présent dans les premières données d'application entrantes.

10. Système selon l'une des revendications 8 et 9, dans lequel, pour identifier l'application, le point d'arbitrage (P2(AR)) est agencé pour compléter l'analyse des premières données d'application entrantes par l'analyse de paramètres de fonctionnement du circuit d'interface NFC, tels le mode de fonctionnement du circuit d'interface ou le protocole de transmission de données sans contact dans lequel les données entrantes sont reçues.

11. Système selon l'une des revendications 8 à 10, dans lequel l'organe de routage (NFCC) est distinct du point d'arbitrage et assure le routage des premières données d'application entrantes au point d'arbitrage (P2(AR)), le routage des données d'application entrantes suivantes au point de destination et de traitement ((P2(AP)), et le routage au circuit d'interface NFC des données d'application sortantes émises par le point de destination et de traitement.

12. Système selon l'une des revendications 8 à 11, dans lequel le point d'arbitrage (P2(AR)) est localisé dans un processeur hôte (HP2) sécurisé du système.

13. Système selon la revendication 12, agencé pour conduire une étape d'authentification du processeur hôte (HP1, HP2, HP3) dans lequel est localisé le point de destination et de traitement (Pi, P2(AP)), et pour ne pas acheminer les données d'application entrantes suivantes au point de destination et de traitement si le processeur hôte n'a pas été valablement authentifié.

## Patentansprüche

1. Verfahren zum Routing von eingehenden oder ausgehenden Anwendungsdaten in einem NFC-System (NFCC, CLINT, HP1, HP2, HP3) umfassend eine NFC-Schnittstellenschaltung (CLINT), welche das kontaktlose Senden und Empfangen von Daten gewährleistet, einen mit der NFC-Schnittstellenschaltung assoziierten NFC-Prozessor (NFCC), und mindestens zwei Host-Prozessoren (HP1, HP2, HP3) des NFC-Prozessors, bei dem das Routing eingehender Anwendungsdaten, die von der Schnittstellenschaltung (CLINT) empfangen werden, die folgenden Schritte umfasst:
- Analyse erster eingehender Anwendungsdaten ("Select File") durch einen Arbitrage-Punkt (P2(AR)), damit die Anwendung, aufgrund deren die Daten zum NFC-System gesendet werden, identifiziert wird, und
- Bestimmung durch den Arbitrage-Punkt (P2(AR)) von einem in einem Hostprozessor (HP1, HP2, HP3) lokalisierten Punkt (Pi, P2(AP)) als Bestimmungsort der Anwendungsdaten und als Verarbeitungsort der Anwendung, und
- Weiterleiten der folgenden eingehenden Anwendungsdaten zum Bestimmungs- und Verarbeitungspunkt (Pi, P2(AP)), und Weiterleiten ausgehender Anwendungsdaten zur NFC-Schnittstellenschaltung, die vom Bestimmungs- und Verarbeitungspunkt (Pi, P2(AP)) gesendet werden,
**dadurch gekennzeichnet, dass** der Arbitrage-Punkt (P2(AR)) zum Routing der eingehenden Anwendungsdaten in einem Hostprozessor (HP2) des NFC-Systems lokalisiert ist, und dass es die Schritte umfasst, die darin bestehen:
- die ersten eingehenden Anwendungsdaten ("Select File") zum in einem Hostprozessor (HP2) lokalisierten Arbitrage-Punkt (P2(AR)) weiterzuleiten, dann die ersten eingehenden Anwendungsdaten ("Select File") zum vom Arbitrage-Punkt bestimmten Bestimmungs- und Verarbeitungspunkt (Pi, P2(AP)) weiterzuleiten.

2. Verfahren nach Anspruch 1, bei dem die durch den Arbitrage-Punkt (P2(AR)) durchgeführte Analyse der ersten eingehenden Anwendungsdaten zur Identifizierung der Anwendung die Extraktion eines in den Daten enthaltenen Anwendungsidentifizierers (AID) umfasst.

3. Verfahren nach Anspruch 1, bei dem die durch den Arbitrage-Punkt (P2(AR)) durchgeführte Analyse der ersten eingehenden Anwendungsdaten zur Identifizierung der Anwendung durch die Analyse von Betriebsparametern der NFC-Schnittstellenschaltung vervollständigt wird, wie zum Beispiel die Funktionsweise der Schnittstellenschaltung oder das kontaktlose Datenübertragungsprotokoll, mit dem die eingehenden Daten empfangen werden.

4. Verfahren nach einem der Ansprüche 1 bis 3, bei dem das Routing der ersten eingehenden Anwendungsdaten zum Arbitrage-Punkt ((P2(AR)), das Routing der folgenden eingehenden Anwendungsdaten zum Bestimmungs- und Verarbeitungspunkt ((P2(AP)) und das Routing der ausgehenden vom Bestimmungs- und Verarbeitungspunkt gesendeten Anwendungsdaten zur NFC-Schnittstellenschaltung, von einer Routing-Vorrichtung (NFCC), die separat vom Arbitrage-Punkt ist, gewährleistet sind.

5. Verfahren nach einem der Ansprüche 1 bis 4, bei dem der Arbitrage-Punkt (P2(AR)) in einem gesicherten Hostprozessor (HP2) des NFC-Systems lokalisiert ist.

6. Verfahren nach einem der Ansprüche 1 bis 5, umfassend einen Schritt der Authentifizierung des Hostprozessors (HP1, HP2, HP3), in dem der Bestimmungs- und Verarbeitungspunkt (Pi, P2(AP)) lokalisiert ist, wobei die folgenden eingehenden Anwendungsdaten nicht zum Bestimmungs- und Verarbeitungspunkt weitergeleitet werden, wenn der Hostprozessor nicht gültig authentifiziert wurde.

7. Verfahren nach einem der Ansprüche 1 bis 6, bei dem die Anwendungsdaten innerhalb des NFC-Systems in einem Routing-Kanal (CHANi) weitergeleitet werden, der von einer Routing-Kanalnummer und zugeordneten Routingparametern definiert ist, die mindestens einen Identifizierer (IDsp) für einen Ausgangspunkt beinhalten und einen Identifizierer (IDdp) für einen Bestimmungspunkt, und in einem Frame (DF) mit einem die Routing-Kanalnummer umfassenden Kopfzeilenfeld eingekapselt sind.

8. NFC-System (NFCC, CLINT, HP1, HP2, HP3), umfassend eine NFC-Schnittstellenschaltung (CLINT), die das kontaktlose Senden und Empfangen von Daten gewährleistet, einen NFC-Prozessor (NFCC), der mit der NFC-Schnittstellenschaltung assoziiert ist, mindestens zwei Hostprozessoren (HP1, HP2, HP3) des NFC-Prozessors, und eine Daten-Routing-Vorrichtung (NFCC) zum Routen von Daten innerhalb des NFC-Systems, **dadurch gekennzeichnet, dass**:
- die Routing-Vorrichtung (NFCC) konfiguriert ist, um das Routing von eingehenden via die NFC-Schnittstellenschaltung empfangenen Anwendungsdaten zu bearbeiten, indem wenigstens erste eingehende Anwendungsdaten zu einem Bestimmungspunkt weitergeleitet werden, der in einem Hostprozessor (HP2) des NFC-Systems lokalisiert ist und als Arbitrage-Punkt (P2(AR)) für das Routing der eingehenden Anwendungsdaten bestimmt ist,
- der genannte Arbitrage-Punkt (P2(AR)) angeordnet ist, um die ersten eingehenden Anwendungsdaten zu analysieren, damit die Anwendung, aufgrund deren die Daten zum NFC-System gesendet werden, identifiziert wird, und um einen Punkt (Pi, P2(AP)) als Bestimmungsort der Anwendungsdaten und als Verarbeitungsort der Anwendung für die Routing-Vorrichtung (NFCC) zu bestimmen, und
- die Routing-Vorrichtung (NFCC) konfiguriert ist, um die ersten eingehenden Anwendungsdaten ("Select File") zum vom Arbitrage-Punkt bestimmten Bestimmungs- und Verarbeitungspunkt (Pi, P2(AP)) weiterzuleiten, und dann die folgenden eingehenden Anwendungsdaten zum vom Arbitrage-Punkt bestimmten Bestimmungs- und Verarbeitungspunkt (Pi, P2(AP)) weiterzuleiten, und ausgehende vom Bestimmungs- und Verarbeitungspunkt (Pi, P2(AP)) gesendete Anwendungsdaten zur NFC-Schnittstellenschaltung weiterzuleiten.

9. System nach Anspruch 8, bei dem zur Identifizierung der Anwendung der Arbitrage-Punkt (P2(AR)) angeordnet ist, um einen in den ersten eingehenden Anwendungsdaten enthaltenen Anwendungsidentifizierer (AID) zu extrahieren.

10. System nach einem der Ansprüche 8 und 9, bei dem zur Identifizierung der Anwendung der Arbitrage-Punkt (P2(AR)) angeordnet ist, um die Analyse der ersten eingehenden Anwendungsdaten durch die Analyse von Betriebsparametern der NFC-Schnittstellenschaltung zu vervollständigen, wie zum Beispiel die Funktionsweise der Schnittstellenschaltung oder das kontaktlose Datenübertragungsprotokoll, mit dem die eingehenden Daten empfangen werden.

11. System nach einem der Ansprüche 8 bis 10, bei dem die Routing-Vorrichtung (NFCC) separat vom Arbitrage-Punkt ist und das Routing der ersten eingehenden Anwendungsdaten zum Arbitrage-Punkt (P2(AR)), das Routing der folgenden eingehenden Anwendungsdaten zum Bestimmungs- und Verarbeitungspunkt ((P2(AP)), und das Routing der ausgehenden vom Bestimmungs- und Verarbeitungspunkt gesendeten Anwendungsdaten zur NFC-Schnittstellenschaltung gewährleistet.

12. System nach einem der Ansprüche 8 bis 11, bei dem der Arbitrage-Punkt (P2(AR)) in einem gesicherten Hostprozessor (HP2) des Systems lokalisiert ist.

13. System nach Anspruch 12, angeordnet um einen Schritt der Authentifizierung des Hostprozessors (HP1, HP2, HP3) durchzuführen, in dem der Bestimmungs- und Verarbeitungspunkt (Pi, P2(AP)) lokalisiert ist, und um die folgenden eingehenden Anwendungsdaten nicht zum Bestimmungs- und Verarbeitungspunkt weiterzuleiten, wenn der Hostprozessor nicht gültig authentifiziert wurde.

## Claims

1. Method for routing incoming or outgoing application data in an NFC system (NFCC, CLINT, HP1, HP2, HP3) comprising an NFC interface circuit (CLINT) performing contactless data sending and receiving, an NFC processor (NFCC) associated with the NFC interface circuit and with at least two host processors (HP1, HP2, HP3) of the NFC processor, wherein the routing of incoming application data received by the interface circuit (CLINT) comprises the steps of:
- causing an arbitration point (P2(AR)) to analyze first incoming application data ("Select File") so that it identifies the application for which the data are sent to the NFC system, and
- causing the arbitration point (P2(AR)) to designate a point (Pi, P2(AP)) of destination of the application data and of processing of the application located in a host processor (HP1, HP2, HP3), and
- routing the following incoming application data to the destination and processing point (Pi, P2(AP)), and routing outgoing application data sent by the destination and processing point (Pi, P2(AP)) to the NFC interface circuit,
**characterized in that** the arbitration point (P2(AR)) for the routing of the incoming application data is located in a host processor (HP2) of the NFC system, and **in that** it comprises the steps of:
- routing the first incoming application data ("Select File") to the arbitration point (P2(AR)) located in a host processor (HP2), then re-routing the first incoming application data ("Select File") to the destination and processing point (Pi, P2 (AP) ) designated by the arbitration point.

2. Method according to claim 1, wherein the analysis of the first incoming application data by the arbitration point (P2(AR)), in order to identify the application, comprises the extraction of an application identifier (AID) present in the data.

3. Method according to claim 1, wherein the analysis of the first incoming application data by the arbitration point (P2(AR)), in order to identify the application, is completed by the analysis of operating parameters of the NFC interface circuit, such as the operating mode of the interface circuit or the contactless data transmission protocol in which the incoming data are received.

4. Method according to one of claims 1 to 3, wherein the routing of the first incoming application data to the arbitration point (P2(AR)), the routing of the following incoming application data to the destination and processing point (P2(AP)), and the routing of outgoing application data sent by the destination and processing point to the NFC interface circuit, are performed by a routing element (NFCC) different from the arbitration point.

5. Method according to one of claims 1 to 4, wherein the arbitration point (P2(AR)) is located in a secure host processor (HP2) of the NFC system.

6. Method according to one of claims 1 to 5, comprising a step of authenticating the host processor (HP1, HP2, HP3) in which the destination and processing point (Pi, P2(AP)) is located, and the following incoming application data are not routed to the destination and processing point if the host processor has not been validly authenticated.

7. Method according to one of claims 1 to 6, wherein the application data are routed within the NFC system through a routing channel (CHANi) defined by a routing channel number and associated routing parameters comprising at least one identifier (IDsp) of a source point and one identifier (IDdp) of a destination point, and are encapsulated in a frame (DF) having a header field comprising the routing channel number.

8. NFC system (NFCC, CLINT, HP1, HP2, HP3) comprising an NFC interface circuit (CLINT) performing contactless data sending and receiving, an NFC processor (NFCC) associated with the NFC interface circuit, at least two host processors (HP1, HP2, HP3) of the NFC processor, and an element (NFCC) for routing data within the NFC system, **characterized in that**:
- the routing element (NFCC) is configured to process the routing of incoming application data received via the NFC interface circuit, by routing at least first incoming application data to a destination point located in a host processor of the NFC system and designated as arbitration point (P2(AR)) of the routing of incoming application data,
- said arbitration point (P2(AR)) is arranged to analyze the first incoming application data in order to identify the application for which the data are sent to the NFC system, and designate to the routing element (NFCC) a point (Pi, P2(AP)) of destination of the application data and of processing of the application, and
- the routing element (NFCC) is configured to re-route the first incoming application data ("Select File") to the destination and processing point (Pi, P2 (AP) ) designated by the arbitration point, then route the following incoming application data to the destination and processing point (Pi, P2(AP)) designated by the arbitration point, and route outgoing application data sent by the destination and processing point (Pi, P2(AP)) to the NFC interface circuit.

9. System according to claim 8, wherein, to identify the application, the arbitration point (P2(AR)) is arranged to extract an application identifier (AID) present in the first incoming application data.

10. System according to one of claims 8 and 9, wherein, to identify the application, the arbitration point (P2(AR)) is arranged to complete the analysis of the first incoming application data by the analysis of operating parameters of the NFC interface circuit, such as the operating mode of the interface circuit or the contactless data transmission protocol in which the incoming data are received.

11. System according to one of claims 8 to 10, wherein the routing element (NFCC) is different from the arbitration point and performs the routing of the first incoming application data to the arbitration point (P2(AR)), the routing of the following incoming application data to the destination and processing point (P2(AP)), and the routing of the outgoing application data sent by the destination and processing point to the NFC interface circuit.

12. System according to one of claims 8 to 11, wherein the arbitration point (P2(AR)) is located in a secure host processor (HP2) of the system.

13. System according to claim 12, arranged to perform a step of authenticating the host processor (HP1, HP2, HP3) in which the destination and processing point (Pi, P2(AP)) is located, and not to route the following incoming application data to the destination and processing point if the host processor has not been validly authenticated.
